(19) Europäisches Patentamt
European Patent Office
Office européen des brevets

(11) EP 2 896 603 A1

(12) EUROPÄISCHE PATENTANMELDUNG

(43) Veröffentlichungstag:
**22.07.2015 Patentblatt 2015/30**

(51) Int Cl.:
***C04B 24/26*** $^{(2006.01)}$ ***C04B 28/14*** $^{(2006.01)}$

(21) Anmeldenummer: **14151976.9**

(22) Anmeldetag: **21.01.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF SE**
**67056 Ludwigshafen (DE)**

(72) Erfinder:
- **Gädt, Torben**
  **83278 Traunstein (DE)**
- **Grassl, Harald**
  **84550 Feichten (DE)**
- **Winklbauer, Martin**
  **84553 Halsbach (DE)**
- **Mazanec, Oliver**
  **83022 Rosenheim (DE)**

(74) Vertreter: **Gastner, Thomas et al**
**BASF Construction Solutions GmbH**
**Abteilung GVX/DT**
**Dr.-Albert-Frank-Straße 32**
**83308 Trostberg (DE)**

# (54) Calciumsulfat-Zusammensetzung umfassend ein Additiv

(57) Die Erfindung betrifft eine Zusammensetzung umfassend mindestens 10 Gew.-% eines Bindemittels auf Basis von Calciumsulfat und 0,005 bis 5 Gew.-% eines Additivs hergestellt aus wenigstens einem wasserlöslichen Salz eines mehrwertigen Metallkations, wenigstens einer Verbindung, die ein Anion freizusetzen vermag, das mit dem mehrwertigen Metallkation ein schwerlösliches Salz bildet, und wenigstens einem polymeren Dispergiermittels, das anionische und/oder anionogene Gruppen und Polyetherseitenketten umfasst. Weiterhin wird ein Verfahren zur Herstellung dieser Zusammensetzung sowie deren Verwendung als Calciumsulfat-Fließestrich, fließfähige Calciumsulfat-Spachtelmasse oder erdfeuchter Calciumsulfat-Estrich beschrieben.

EP 2 896 603 A1

## Beschreibung

Die Erfindung betrifft eine Zusammensetzung umfassend Calciumsulfat und ein Additiv, wobei das Additiv eine Verbesserung der Fließfähigkeit der Zusammensetzung bei langer Verarbeitbarkeit ermöglicht und die Zusammensetzung anschließend schnell eine hohe Festigkeit und insbesondere Frühfestigkeit erreicht. Die erfindungsgemäßen Zusammensetzungen können insbesondere als Fließestrich eingesetzt werden.

Anhydrit-Fließestriche sind Estriche, die in unterschiedlichen Mörtelkonsistenzen in das Bauwerk eingepumpt werden. Diese Estriche nivellieren weitgehend selbständig bzw. werden mit geringem Aufwand, beispielsweise unter Einsatz einer sogenannten Schwabbelstange, eingeebnet. Vorteile von Anhydrit-Fließestrichen sind u. a. die hohe Biegezugfestigkeit, geringe Tendenz zum Schüsseln (Aufwölbung der Estrichplatte an den Rändern durch Schwinden) sowie die Möglichkeit, auch grosse Flächen fugenlos zu verlegen.

In der Praxis werden solche Fließestriche in Form von Nass-und Trockenmörtelsystemen eingesetzt. Nassmörtel werden in einer angemischten Form mit Fahrmischern an die Baustelle geliefert, Trockenmörtel werden in Silos oder in Säcken an die Baustelle geliefert und dort angemischt.

Als Bindemittel kommt hierbei vor allem Anhydrit zum Einsatz. Im Bereich der Anhydrite (chem. $CaSO_4$) sind Naturanhydrit, synthetischer Anhydrit und thermischer Anhydrit (REA-Anhydrit) bekannt. Im Gegensatz zu Gips (chem. $CaSO_4$ * ½ $H_2O$) bindet Anhydrit nach Zugabe von Wasser nicht in einer praxisgerechten Zeit ab. Dies geschieht erst nach Zugabe von geeigneten Anregern. Neben reinem Anhydrit werden auch vielfältige Mischungen aus diesem Bindemitteltyp eingesetzt, wie z. B. Anhydrit/ Branntgips-Mischsysteme mit einem Anteil von bis zu 50 Gew.-% Branntgips. Der Branntgips kann hierbei aus Natur-oder REA-Gips hergestellt sein; üblicherweise kommt jedoch $\alpha$-Halbhydrat zur Anwendung. Als weitere Bindemittelmischungen auf Basis von Anyhdrit kommen Anhydrit/Zement-Mischsysteme zum Einsatz. Bei diesen Systemen wird ein Kompromiss zwischen den niedrigen Schwindwerten des Anhydrits und der Wasserresistenz des Zementes eingegangen. Der Zementanteil ist üblicherweise kleiner als 1/3 der gesamten Bindemittelmenge.

Bei den Anhydrit-Fließestrichen werden als alkalische Anreger vorzugsweise Zement und/oder salzartige Anreger, wie beispielsweise Caliumsulfat, verwendet. Bei Verwendung von $\alpha$-Halbhydrat werden im allgemeinen auch noch Verzögerer zugesetzt, wobei beispielsweise hydrolysierte Proteine oder Polyhydroxycarbonsäuren (wie beispielsweise Weinsäure) in Frage kommen. Weitere Zusätze können z. B. Antischaummittel oder Stabilisatoren sein.

Eine wichtige Gruppe an Zusatzmitteln stellt die der Fließmittel dar. Damit wird die Erleichterung der Verarbeitbarkeit und insbesondere die Verbesserung der Fließfähigkeit erreicht. Für diese Zwecke werden im allgemeinen verschiedene Ligninsulfonate, Naphthalinsulfonate und/oder Melamin Formaldehyd-Sulfit-Kondensationsprodukte eingesetzt. Diese Verbindungsklassen haben sich technisch bewährt, von Nachteil ist aber, dass sie die Verarbeitbarkeit nur über einen relativ kurzen Zeitraum aufrecht erhalten.

Die Verwendung von Copolymeren auf Basis eines Polycarboxylatethers als Fließmittel und Konsistenzerhalter für bauchemische Massen ist ebenfalls hinlänglich bekannt. Derartige Copolymere bestehen im Wesentlichen aus einem olefinisch ungesättigten Monocarbonsäure-Comonomer oder einem Ester oder einem Salz davon und/oder einem olefinisch ungesättigten Sulfonsäure-Comonomer auf der einen Seite, und einem Comonomer mit Polyetherfunktion auf der anderen Seite. Näher beschrieben sind derartige Copolymere bspw. in EP 0 537 870, EP 0 736 553, EP 1 138 698, EP 1 189 955 und EP 1 902 085.

Insbesondere für Calciumsulfat Fließestriche und Spachtelmassen werden nach dem Stand der Technik Fließmittel und Konsistenzerhalter insbesondere auf Basis von Melamin-Formaldehyd-Kondensaten eingesetzt, da sie eine nur minimale Verzögerung der Abbindereaktion des Bindemittels verursachen, auch wenn die offene Zeit hierbei relativ kurz ist.

Als nachteilig im Hinblick auf die Copolymere auf Basis von Polycarboxylatethern als Fließmittel hat sich die offene Zeit herausgestellt, welche für viele Anwendungen nicht ausreichend ist.

Wie bereits erwähnt, ist der Fließmaßverlust über die Zeit bei den auf dem Markt angebotenen Systemen, welche Fließmittel auf Basis von Melamin-Formaldehyd-Kondensaten verwenden, relativ groß. Andererseits ist eine lange Verarbeitungszeit besonders auf großen bzw. geometrisch schwierigen Baustellen (z. B. L-förmige Räume mit der Tür im Winkel) wichtig, um auch noch nach längerer Zeitdauer den eingebrachten Estrich nivellieren zu können.

Häufig werden Anhydrit-Fließestriche bereits im Werk des Estrichherstellers mit Wasser angemischt und per Fahrmischer an die Baustelle angeliefert. Damit der gelieferte Estrich seine selbstverlaufenden und nivellierenden Eigenschaften an der Baustelle entfalten kann, sind für Fahrmischerrezepturen nicht selten offene Zeiten von 3 - 4 Stunden erforderlich.

Polymere Fließmittel belegen die Oberflächen der Bindemittel-Komponenten und bewirken so eine höhere Fließfähigkeit der Partikel in der feuchten Zusammensetzung, wodurch beträchtliche Mengen an Anmachwasser eingespart werden können.

Die Reduzierung der Wassermenge hat aber auch den Effekt, dass die erhaltenen ausgehärteten Produkte eine erhöhte Festigkeit und Dichte aufweisen. Ein weiterer Vorteil besteht darin, sich durch die Zugabe von Copolymeren

auf Basis von Polycarboxylatethern zur bevorzugten und weit günstigeren □-Form des Halbhydrats den Wasser-Gips-Werten der teuren □-Form anzunähern.

In dem US-Patent 7,338,990 B2 ist eine Mischung beschrieben, die Zement und calcinierten Gips enthält und darüber hinaus ein Polycarboxylateter-Dispergiermittel. Bei dem Dispergiermittel handelt es sich um ein Copolymer auf Basis eines Oxyalkylenglykolalkylethers und ungesättigten Dicarbonsäurederivaten. Diese Mischung wird eingesetzt, um Produkte für den Außenbereich herzustellen.

Aus US 7,056,964 B2 ist ebenfalls eine Mischung beschrieben, die mit einer definierten Menge Anmachwasser zu einer Slurry verarbeitet werden kann, welche als Fließestrich mit einer hohen Festigkeit verwendet werden kann. Die Mischung besteht aus einem Calciumsulfathemihydrat, bei dem mindestens 25% in der □-Form vorliegen müssen, und einem Polycarboxylatfließmittel. Beim Fließmittel handelt es sich um ein Copolymer eines Oxyalkylenalkylethers und einer ungesättigten Dicarbonsäure.

WO0249983 beschreibt die Verwendung von Fließmitteln auf Polycarboxylatether-Basis aus wasserlöslichen Copolymeren für Anhydrit basierte Fließestriche. Die beschriebenen Verbindungen liefern gute Fließ- und Verlaufseigenschaften in dem Bindemittelsystem und eine relativ lange Verarbeitbarkeit.

Als nachteilig im Hinblick auf den Stand der Technik hat sich eine nicht ausreichend lange offene Zeit der erzeugten Massen herausgestellt.

Die Bauindustrie verlangt nach Systemen, welche wenig oder keine flüchtigen organischen Verbindungen emittieren. Dieses Verlangen wird zum Beispiel in Emicode Siegel der Gemeinschaft Emissionskontrollierte Verlegewerkstoffe, Klebstoffe und Bauprodukte e.V. (GEV) deutlich. Dies ist insbesondere für die Verwendung von Baustoffen in Innenräumen, wie Fließestrichen, relevant. Ein Nachteil von Kondensaten auf der Basis von Melaminsulfonat-Formaldehyd-Kondensaten besteht darin, dass nicht gänzlich ausgeschlossen werden kann, dass flüchtige organische Verbindungen wie Formaldehyd in Luft gelangen.

Der vorliegenden Erfindung lag daher die Aufgabe zugrunde, Fließmittel für Calciumsulfatbasierte Massen bereitzustellen, welche die genannten Nachteile des Standes der Technik nicht aufweisen, sondern eine hervorragende verflüssigende Wirkung aufweisen, gleichzeitig die Verarbeitbarkeit der Calciumsulfat-basierten Massen für längere Zeit aufrecht erhalten und anschließend schnell eine hohe Festigkeit und insbesondere Frühfestigkeit der Calciumsulfat - basierten Massen ermöglichen. Weiterhin sollten die Fließmittel möglichst wenige flüchtige organische Verbindungen in die Luft emittieren.

Diese Aufgabe wird gelöst durch folgende Ausführungsformen:

1. Zusammensetzung umfassend, bezogen auf die Gesamtmasse der Zusammensetzung

A) mindestens 10 Gew.-% eines Bindemittels auf Basis von Calciumsulfat und
B) 0,005 bis 5 Gew.-% eines Additivs hergestellt aus

i) wenigstens einem wasserlöslichen Salz eines mehrwertigen Metallkations,
ii) wenigstens einer Verbindung, die ein Anion freizusetzen vermag, das mit dem mehrwertigen Metallkation ein schwerlösliches Salz bildet, und
iii) wenigstens einem polymeren Dispergiermittels, das anionische und/oder anionogene Gruppen und Polyetherseitenketten umfasst,

wobei das mehrwertige Metallkation ausgewählt ist aus $Al^{3+}$, $Fe^{3+}$, $Fe^{2+}$, $Zn^{2+}$, $Mn^{2+}$, $Cu^{2+}$, $Mg^{2+}$, $Ca^{2+}$, $Sr^{2+}$, $Ba^{2+}$ und Gemischen davon,
wobei das Metallkation in solcher Menge vorliegt, dass das folgende Verhältnis nach Formel (a) größer als 0,1 und kleiner oder gleich 30 ist:

$$0{,}1 < \frac{\sum_i z_{K,i} \times n_{K,i}}{\sum_j z_{S,j} \times n_{S,j}} \leq 30 \qquad \text{(a)}$$

und wobei

$Z_{K,i}$ für den Betrag der Ladungszahl des mehrwertigen Metallkations steht,
$n_{K,i}$ für die Molzahl des mehrwertigen Metallkations steht,
$z_{S,j}$ für den Betrag der Ladungszahl der im polymeren Dispergiermittel enthaltenen anionischen und anionogenen Gruppe steht, und
$n_{S,j}$ für die Molzahl der im polymeren Dispergiermittel enthaltenen anionischen und anionogenen Gruppe steht,

die Indices i und j voneinander unabhängig und eine ganze Zahl größer als 0 sind, wobei i für die Anzahl verschiedenartiger mehrwertiger Metallkationen steht und j für die Anzahl verschiedenartiger im polymeren Dispergiermittel enthaltener anionischer und anionogener Gruppen steht.

$z_{K,i}$ ist so definiert, dass die Ladungszahl für Metallkationen sich stets auf die volle formale Ladung bezieht, d.h. $z_{Fe}(FeCl_3) = 3$, $z_{Fe}(FeCl_2) = 2$.

Die Ladungszahl $z_{S,j}$ steht für den Betrag der formalen Ladung bei maximaler Deprotonierung der im polymeren Dispergiermittel enthaltenen anionischen und anionogenen Gruppe, d.h. z. B. bei den Gruppen ($-OPO_3H_2$), ($-OPO_3H^-$), ($-OPO_3^{2-}$), ($-PO_3H_2$), ($-PO_3H^-$), und ($-PO_3^{2-}$) steht z für 2, und bei den Gruppen (-COOH) und (-COO-) steht z für 1.

2. Zusammensetzung nach Ausführungsform 1, wobei das mehrwertige Metallkation ausgewählt ist aus der Gruppe $Al^{3+}$, $Fe^{3+}$, $Fe^{2+}$, $Mn^{2+}$, $Zn^{2+}$, $Ca^{2+}$ und Gemischen davon.

3. Zusammensetzung nach Ausführungsform 2, wobei das mehrwertige Metallkation ausgewählt ist aus der Gruppe $Al^{3+}$, $Fe^{3+}$, $Fe^{2+}$, $Ca^{2+}$ und Gemischen davon.

4. Zusammensetzung nach Anspruch 1, wobei das mehrwertige Metallkation und das Anion in Mengen vorliegen, die nach folgenden Formeln berechnet werden:

$$0{,}1 < \frac{\sum_i z_{K,i} \times n_{K,i}}{\sum_j z_{S,j} \times n_{S,j}} \leq 30 \qquad \text{(a)}$$

$$0{,}01 < \frac{\sum_l z_{A,l} \times n_{A,l}}{\sum_j z_{K,i} \times n_{K,i}} \leq 3 \qquad \text{(b)}$$

wobei das Verhältnis nach Formel (b) bevorzugt zwischen 0,05 und 1,5, besonders bevorzugt zwischen 0,1 und 1,0, insbesondere bevorzugt zwischen 0,15 und 0,8 und ganz besonders bevorzugt zwischen 0,2 und 0,75 liegt, und

$z_{K,i}$ für den Betrag der Ladungszahl des mehrwertigen Metallkations steht,
$n_{K,i}$ für die Molzahl des mehrwertigen Metallkations steht,
$z_{S,j}$ für Ladungszahl der im polymeren Dispergiermittel enthaltenen anionischen und anionogenen Gruppen steht,
$n_{S,j}$ für die Molzahl der im polymeren Dispergiermittel enthaltenen anionischen und anionogenen Gruppen steht,
$z_{A,l}$ für die Ladungszahl des Anions steht,
$n_{A,l}$ für die Molzahl des Anions steht,

die Indices i, j und l voneinander unabhängig und eine ganze Zahl größer als 0 sind, i für die Anzahl verschiedenartiger mehrwertiger Metallkationen steht, j für die Anzahl verschiedenartiger im polymeren Dispergiermittel enthaltener anionischer und anionogener Gruppen steht, und l für die Anzahl verschiedenartiger Anionen, welche mit dem Metallkation ein schwerlösliches Salz zu bilden vermögen, steht.

Die Ladungszahl $z_{A,l}$ steht für den Betrag der formalen Ladung bei maximaler Deprotonierung, d.h. z.B. bei den Gruppen ($H_3PO_4$) und ($Na_3PO_4$)steht $z_{PO4\ \text{für}}$ 3, oder bei ($Na_2CO_3$) steht $z_{CO3}$ für 2. Im Fall von Aluminat wird gesetzt $z_{AlO2}(NaAlO_2) = z_{AlO2}(NaAl(OH)_4) = 1$, im Fall von Silikat wird für alle Silikatspezies gesetzt $z_{SiO3}(Na_2SiO_3) = 2$.

5. Zusammensetzung nach einer der vorhergehenden Ausführungsformen, wobei das Verhältnis nach Formel (a) im Bereich von 0,1 bis 25, vorzugsweise 0,3 bis 24, besonders bevorzugt 0,5 bis 23, weiter bevorzugt 0,6 bis 15 und insbesondere im Bereich von 0,75 bis 5, liegt.

6. Zusammensetzung nach einer der vorhergehenden Ausführungsformen, wobei es sich bei dem Anion um mindestens eines aus der Gruppe Carbonat, Oxalat, Silikat, Phosphat, Polyphosphat, Phosphit, Borat, Aluminat, Ferrat, Zinkat und Sulfat handelt.

7. Zusammensetzung nach Ausführungsform 6, wobei es sich bei dem Anion um mindestens eines aus der Gruppe Carbonat, Silikat, Phosphat, Aluminat, Ferrat und Zinkat handelt.

8. Zusammensetzung nach Ausführungsform 7, wobei das Anion Phosphat oder Aluminat ist.

9. Zusammensetzung nach einer der vorhergehenden Ausführungsformen, wobei die Menge des Additivs in der erfindungsgemäßen Zusammensetzung von 0,01 bis 4 Gew.-%, bevorzugt 0,05 bis 1,5 Gew.-% und insbesondere 0,075 bis 1 Gew.-% beträgt.

10. Zusammensetzung nach einem der vorhergehenden Ansprüche, wobei in dem Additiv das mindestens eine mehrwertige Metallkation und das Anion in Mengen vorliegen, die nach folgender Formel berechnet werden:

$$0{,}25 < \frac{\left(\sum_i z_{K,i} \times n_{K,i}\right)^2}{\left(\sum_l z_{A,l} \times n_{A,l}\right)\left(\sum_j z_{s,j} \times n_{s,j}\right)} < 25 \qquad (c)$$

wobei das Verhältnis nach Formel (c) bevorzugt im Bereich von 0,4 bis 20 und besonders bevorzugt im Bereich von 1 bis 10 liegt.

11. Zusammensetzung nach einer der vorhergehenden Ausführungsformen, die bei Normaldruck bevorzugt eine Lagerstabilität von mehr als 6 Monaten aufweist, wobei die Lagerstabilität bei 40 °C, gemessen wird.

12. Zusammensetzung nach einer der vorhergehenden Ausführungsformen, wobei das Additiv im Wesentlichen keine Zubereitung eines $Al^{3+}$, $Ca^{2+}$, oder $Mg^{2+}$ Salzes und eines Silikats umfasst.

13. Zusammensetzung nach Ausführungsform 12, wobei die Summe im Zähler der Formel (a) mindestens 200 mal größer ist als der auf die Zubereitungen der $Al^{3+}$, $Ca^{2+}$, oder $Mg^{2+}$ Salze und des Silikats entfallende Teil der Summe im Zähler der Formel (a).

14. Zusammensetzung nach Ausführungsform 13, wobei die Summe im Zähler der Formel (a) mindestens 1000 mal größer ist als der auf die Zubereitungen der $Al^{3+}$, $Ca^{2+}$, oder $Mg^{2+}$ Salze und des Silikats entfallende Teil der Summe im Zähler der Formel (a).

15. Zusammensetzung nach einem der vorhergehenden Ansprüche, dadurch gekennzeichnet, dass das Additiv zusätzlich wenigstens ein pH-Neutralisierungsmittel umfasst.

16. Zusammensetzung nach Ausführungsform 15, wobei es sich bei dem pH-Neutralisierungsmittel um mindestens eines aus der Gruppe Alkalimetallhydroxid, organisches Monoamin, organisches Diamin, organisches Polyamin oder Ammoniak handelt.

17. Zusammensetzung nach Ausführungsform 16, wobei das pH-Neutralisierungsmittel ausgewählt ist unter Natriumhydroxid, Kaliumhydroxid, Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, Mono-$C_1$-$C_4$-alkylaminen, Di-$C_1$-$C_4$-alkylaminen, Tri-$C_1$-$C_4$-alkylaminen, $C_1$-$C_4$-Alkylendiaminen, (Tetra-hydroxy-$C_1$-$C_4$-alkyl)-$C_1$-$C_4$-alkylendiaminen, Polyethylenaminen, Polypropylenaminen und Gemischen davon.

18. Zusammensetzung nach Ausführungsform 17, wobei das pH-Neutralisierungsmittel ausgewählt ist unter Natriumhydroxid, Kaliumhydroxid, Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, $C_1$-$C_4$-Alkylendiaminen, Polyethylenaminen und Gemischen davon.

19. Zusammensetzung nach Ausführungsform 18, wobei das pH-Neutralisierungsmittel ausgewählt ist unter Natriumhydroxid, Kaliumhydroxid, Ammoniak, Ethylendiamin, Monoethanolamin, Diethanolamin, Triethanolamin, Polyethylenaminen und Gemischen davon.

20. Zusammensetzung nach Ausführungsform 19, wobei das pH-Neutralisierungsmittel ausgewählt ist unter Natriumhydroxid und Kaliumhydroxid und Gemischen davon.

21. Zusammensetzung nach Ausführungsform 20, wobei das pH-Neutralisierungsmittel Natriumhydroxid ist.

22. Zusammensetzung nach einer der vorhergehenden Ausführungsformen, wobei eine 1 molare Suspension des Additivs in Wasser einen pH-Wert von 2 bis 12, vorzugsweise 3 bis 11 und insbesondere 4 bis 10 aufweist.

23. Zusammensetzung nach einem der vorhergehenden Ansprüche, wobei das polymere Dispergiermittel als anionische oder anionogene Gruppe zumindest eine Struktureinheit der allgemeinen Formeln (Ia), (Ib), (Ic) und/oder (Id) aufweist:

(Ia)

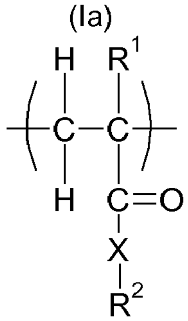

worin

$R^1$ für H oder eine unverzweigte oder verzweigte $C_1$-$C_4$-Alkylgruppe, $CH_2COOH$ oder $CH_2CO$-X-$R^2$ steht;
X für $NR^3$-$(C_nH_{2n})$ oder O-$(C_nH_{2n})$ mit n = 1, 2, 3 oder 4 steht, wobei das Stickstoffatom bzw. das Sauerstoffatom an die CO-Gruppe gebunden ist;
$R^2$ für $PO_3M_2$, O-$PO_3M_2$, $(C_6H_4)$-$PO_3M_2$ oder $(C_6H_4)$-$OPO_3M_2$ steht; oder X für eine chemische Bindung und $R^2$ für OM stehen;
$R^3$ für H, $C_1$-$C_6$-Alkyl, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$ oder $(C_nH_{2n})$-O-$(AO)_\alpha$-$R^4$ steht;
$\alpha$ für eine ganze Zahl von 1 bis 350 steht;
$R^4$ für H oder eine unverzweigte oder verzweigte $C_1$-$C_4$-Alkylgruppe steht; und
M unabhängig voneinander für H oder ein Kationäquivalent steht;

(Ib)

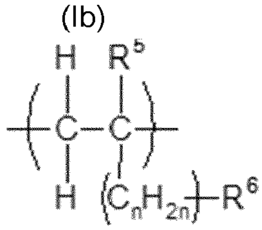

worin

$R^5$ für H oder eine unverzweigte oder verzweigte $C_1$-$C_4$-Alkylgruppe steht;
n für 0, 1, 2, 3 oder 4 steht;
$R^6$ für $PO_3M_2$ oder O-$PO_3M_2$ steht; und
M unabhängig voneinander für H oder ein Kationäquivalent steht;

(Ic)

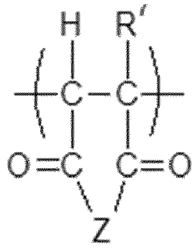

worin

$R^7$ für H oder eine unverzweigte oder verzweigte $C_1$-$C_4$-Alkylgruppe steht;

Z für O oder $NR^8$ steht; und
$R^8$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht,
n für 1, 2, 3 oder 4 steht, und
M unabhängig voneinander für H oder ein Kationäquivalent steht;

(Id)

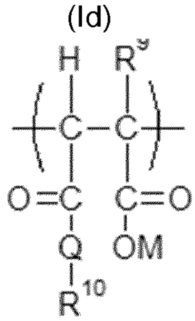

worin

$R^9$ für H oder eine unverzweigte oder verzweigte $C_1$-$C_4$-Alkylgruppe steht;
Q für $NR^{10}$ oder O steht;
$R^{10}$ für H, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$ oder $(C_nH_{2n})$-O-$(AO)_\beta$-$R^{11}$ steht,

A für $C_xH_{2x}$ mit x = 2, 3, 4 oder 5 oder $CH_2CH(C_6H_5)$ steht;
β für eine ganze Zahl von 1 bis 350 steht;
$R^{11}$ für H oder eine unverzweigte oder verzweigte $C_1$-$C_4$-Alkylgruppe steht;
n für 1, 2, 3 oder 4 steht; und
M unabhängig voneinander für H oder ein Kationäquivalent steht.

24. Zusammensetzung nach Ausführungsform 23, wobei das polymere Dispergiermittel als anionische oder anionogene Gruppe mindestens eine Struktureinheit der Formel (Ia) aufweist, worin $R^1$ für H oder $CH_3$ steht; und/oder mindestens eine Struktureinheit der Formel (Ib), worin $R^5$ für H oder $CH_3$ steht; und/oder mindestens eine Struktureinheit der Formel (Ic), worin $R^7$ für H oder $CH_3$ steht und Z für O steht; und/oder mindestens eine Struktureinheit der Formel (Id), worin $R^9$ für H steht und Q für O steht.

25. Zusammensetzung nach Ausführungsform 23, wobei das polymere Dispergiermittel als anionische oder anionogene Gruppe mindestens eine Struktureinheit der Formel (Ia) aufweist, worin $R^1$ für H oder $CH_3$ steht und $XR^2$ für OM oder X für $O(C_nH_{2n})$ mit n = 1, 2, 3 oder 4, insbesondere 2, steht und $R^2$ für O-$PO_3M_2$ steht.

26. Zusammensetzung nach einer der vorhergehenden Ausführungsformen, wobei das polymere Dispergiermittel als Polyetherseitenkette zumindest eine Struktureinheit der allgemeinen Formeln (IIa), (IIb), (IIc) und/oder (IId) aufweist:

(IIa)

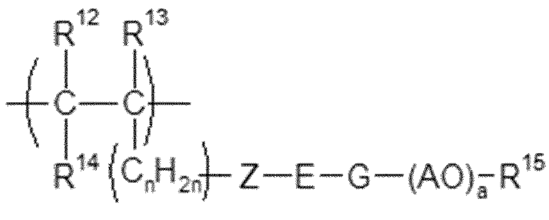

worin

$R^{12}$, $R^{13}$ und $R^{14}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe,

$CH_2$-$C_6H_{10}$, 1,2-Phenylen, 1,3-Phenylen, oder 1,4-Phenylen steht;

G für O, NH oder CO-NH steht; oder

E und G gemeinsam für eine chemische Bindung stehen;

Z für O oder S steht;

A für $C_xH_{2x}$ mit x = 2, 3, 4 oder 5 oder $CH_2CH(C_6H_5)$ steht;

n für 0, 1, 2, 3, 4 und/oder 5 steht;

a für eine ganze Zahl von 2 bis 350 steht; und

$R^{15}$ für H, eine unverzweigte oder verzweigte $C_1$-$C_4$-Alkylgruppe, CO-$NH_2$ und/oder $COCH_3$ steht;

(IIb)

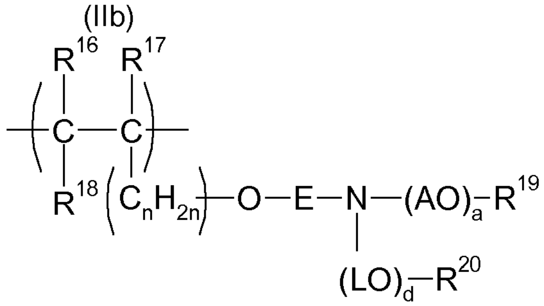

worin

$R^{16}$, $R^{17}$ und $R^{18}$ unabhängig voneinander für H oder eine unverzweigte oder verzweigte $C_1$-$C_4$-Alkylgruppe stehen;

E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht;

A für $C_xH_{2x}$ mit x = 2, 3, 4 oder 5 oder $CH_2CH(C_6H_5)$ steht;

L für $C_xH_{2x}$ mit x = 2, 3, 4 oder 5 oder $CH_2$-$CH(C_6H_5)$ steht;

a für eine ganze Zahl von 2 bis 350 steht;

d für eine ganze Zahl von 1 bis 350 steht;

$R^{19}$ für H oder eine unverzweigte oder verzweigte $C_1$-$C_4$-Alkylgruppe steht;

$R^{20}$ für H oder eine unverzweigte $C_1$-$C_4$-Alkylgruppe steht; und

n für 0, 1, 2, 3, 4 oder 5 steht;

(IIc)

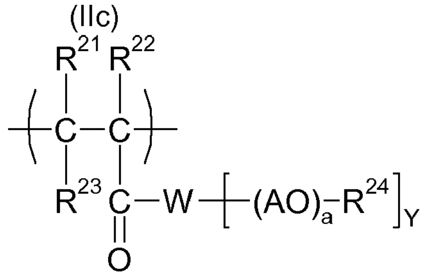

worin

$R^{21}$, $R^{22}$ und $R^{23}$ unabhängig voneinander für H oder eine unverzweigte oder verzweigte $C_1$-$C_4$-Alkylgruppe stehen;

W für O, $NR^{25}$, N steht

Y für 1 steht, wenn W = O oder $NR^{25}$, und für 2 steht, wenn W = N;

A für $C_xH_{2x}$ mit x = 2, 3, 4 oder 5 oder $CH_2CH(C_6H_5)$ steht;

a für eine ganze Zahl von 2 bis 350 steht;

$R^{24}$ für H oder eine unverzweigte oder verzweigte $C_1$-$C_4$-Alkylgruppe steht; und

$R^{25}$ für H oder eine unverzweigte oder verzweigte $C_1$-$C_4$-Alkylgruppe steht;

(IId)

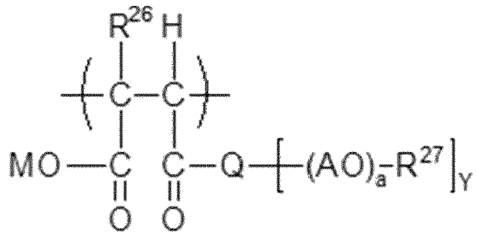

worin

$R^{26}$ für H oder eine unverzweigte oder verzweigte $C_1$-$C_4$-Alkylgruppe steht;
Q für $NR^{10}$, N oder O steht;
Y für 1 steht, wenn Q = O oder $NR^{28}$ und für 2 steht, wenn Q = N;
$R^{27}$ für H oder eine unverzweigte oder verzweigte $C_1$-$C_4$-Alkylgruppe steht;
$R^{28}$ für H oder eine unverzweigte oder verzweigte $C_1$-$C_4$-Alkylgruppe steht;
A für $C_xH_{2x}$ mit x = 2, 3, 4 oder 5, oder $CH_2C(C_6H_5)H$ steht;
a für eine ganze Zahl von 2 bis 350 steht; und
M unabhängig voneinander für H oder ein Kationäquivalent steht

27. Zusammensetzung nach Ausführungsform 26, wobei das polymere Dispergiermittel als Polyetherseitenkette aufweist:

(a) mindestens eine Struktureinheit der Formel (IIa), worin $R^{12}$ und $R^{14}$ für H stehen, $R^{13}$ für H oder $CH_3$ steht, E und G gemeinsam für eine chemische Bindung oder E für eine unverzweigte oder verzweigte $C_1$-$C_6$-Alkylengruppe und G für O stehen, A für $C_xH_{2x}$ mit x = 2 und/oder 3, a für 3 bis 150 steht, und $R^{15}$ für H oder eine unverzweigte oder verzweigte $C_1$-$C_4$-Alkylgruppe steht; und/oder
(b) mindestens eine Struktureinheit der Formel (IIb), worin $R^{16}$ und $R^{18}$ für H stehen, $R^{17}$ für H oder $CH_3$ steht, E für eine unverzweigte oder verzweigte $C_1$-$C_6$-Alkylengruppe steht, A für $C_xH_{2x}$ mit x = 2 und/oder 3 steht, L für $C_xH_{2x}$ mit x = 2 und/oder 3 steht, a für eine ganze Zahl von 2 bis 150 steht, d für eine ganze Zahl von 1 bis 150 steht, $R^{19}$ für H oder eine unverzweigte oder verzweigte $C_1$-$C_4$-Alkylgruppe steht, und $R^{20}$ für H oder eine unverzweigte oder verzweigte $C_1$-$C_4$-Alkylgruppe steht; und/oder
(c) mindestens eine Struktureinheit der Formel (IIc), worin $R^{21}$ und $R^{23}$ für H stehen, $R^{22}$ für H oder $CH_3$ steht, A für $C_xH_{2x}$ mit x = 2 und/oder 3 steht, a für eine ganze Zahl von 2 bis 150 steht, und $R^{24}$ für H oder eine unverzweigte oder verzweigte $C_1$-$C_4$-Alkylgruppe steht; und/oder
(d) mindestens eine Struktureinheit der Formel (IId), worin $R^{26}$ für H steht, Q für O steht, A für $C_xH_{2x}$ mit x = 2 und/oder 3, a für eine ganze Zahl von 1 bis 150 steht.

28. Zusammensetzung nach einer der Ausführungsformen 26 oder 27, wobei das polymere Dispergiermittel mindestens eine Struktureinheit der Formel (IIa) und/oder (IIc) umfasst.

29. Zusammensetzung nach einem der vorhergehenden Ansprüche, wobei das polymere Dispergiermittel ein Polykondensationsprodukt umfassend Struktureinheiten (III) und (IV) ist:

(III)

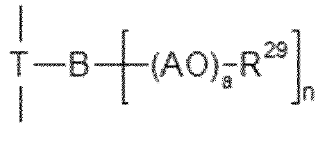

worin

T für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind,

die ausgewählt sind unter N, O und S, steht;

n für 1 oder 2 steht;

B für N, NH oder O steht, mit der Maßgabe, dass n für 2 steht, wenn B für N steht und der Maßgabe, dass n für 1 steht, wenn B für NH oder O steht;

A für $C_xH_{2x}$ mit x = 2, 3, 4 oder 5 oder $CH_2CH(C_6H_5)$ steht;

a für eine ganze Zahl von 1 bis 300 steht; und

$R^{29}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen, wovon 1 oder 2 Atome Heteroatome sind, die ausgewählt sind unter N, O und S, steht;

wobei die Struktureinheit (IV) ausgewählt ist unter den Struktureinheiten (IVa) und (IVb):

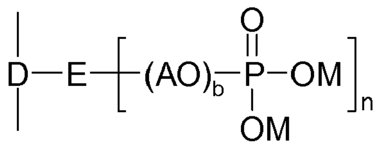

(IVa)

worin

D für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;

E für N, NH oder O steht, mit der Maßgabe, dass n für 2 steht, wenn E für N steht und der Maßgabe, dass n für 1 steht, wenn E für NH oder O steht;

A für $C_xH_{2x}$ mit x = 2, 3, 4 oder 5 oder $CH_2CH(C_6H_5)$ steht;

b für eine ganze Zahl von 1 bis 300 steht; und

M unabhängig voneinander für H oder ein Kationäquivalent stehen;

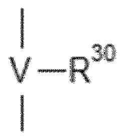

(IVb)

worin

V für einen substituierten oder unsubstituierten Phenyl- oder Naphthylrest steht und gegebenenfalls durch 1 oder zwei Reste substituiert ist, die ausgewählt sind unter $R^{31}$, OH, $OR^{31}$, $(CO)R^{31}$, COOM, $COOR^{31}$, $SO_3R^{31}$ und $NO_2$;

$R^{30}$ für COOM, $OCH_2COOM$, $SO_3M$ oder $OPO_3M_2$ steht;

$R^{31}$ für $C_1$-$C_4$-Alkyl, Phenyl, Naphthyl, Phenyl-$C_1$-$C_4$-alkyl oder $C_1$-$C_4$-Alkylphenyl; und

M unabhängig voneinander für H oder ein Kationäquivalent stehen.

30. Zusammensetzung nach Ausführungsform 29, wobei in der Struktureinheit (III) T für einen substituierten oder unsubstituierten Phenylrest oder Naphthylrest steht, B für NH oder O steht, A für $C_xH_{2x}$ mit x = 2 und/oder 3 steht, a für eine ganze Zahl von 1 bis 150 steht, und $R^{29}$ für H, oder einen verzweigten oder unverzweigten $C_1$- bis $C_{10}$-Alkylrest steht.

31. Zusammensetzung nach Ausführungsform 29, wobei in der Struktureinheit (IVa) D für einen substituierten oder unsubstituierten Phenylrest oder Naphthylrest steht, E für NH oder O steht, A für $C_xH_{2x}$ mit x = 2 und/oder 3 steht, und b für eine ganze Zahl von 1 bis 150 steht.

32. Zusammensetzung nach Ausführungsform 29, wobei T und/oder D für Phenyl oder Naphthyl, das durch 1 oder 2 $C_1$-$C_4$-Alkyl-, Hydroxy- oder 2 $C_1$-$C_4$-Alkoxygruppen substituiert ist, stehen.

33. Zusammensetzung nach Ausführungsform 29, wobei in der Struktureinheit ((IVb) V für Phenyl oder Naphthyl, das durch 1 oder 2 $C_1$-$C_4$-Alkyl, OH, $OCH_3$ oder COOM substituiert ist, und **$R^{30}$** für COOM oder $OCH_2COOM$ steht.

34. Zusammensetzung nach einer der Ausführungsformen 29 bis 33, wobei das Polykondensationsprodukt eine weitere Struktureinheit (V) der Formel

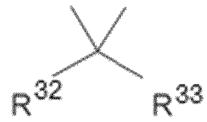

(V)

umfasst, worin
$R^{32}$ und $R^{33}$gleich oder verschieden sein können und für H, $CH_3$, COOH oder für eine substituierte oder unsubstituierte Phenyl- oder Naphthylgruppe stehen.

35. Zusammensetzung nach Ausführungsform 34, worin $R^{32}$ und $R^{33}$ gleich oder verschieden sein können und für H, $CH_3$, oder COOH, insbesondere für H oder einer der Reste $R^{32}$ und $R^{33}$ für H und der andere für $CH_3$, stehen.

36. Zusammensetzung nach einer der Ausführungsformen 1 bis 28, wobei das polymere Dispergiermittel Struktureinheiten der Formeln (Ia) und (IIa) aufweist.

37. Zusammensetzung nach einer der Ausführungsformen 1 bis 28, wobei das polymere Dispergiermittel Struktureinheiten der Formeln (Ia) und (IIc) aufweist.

38. Zusammensetzung nach einer der Ausführungsformen 1 bis 28, wobei das polymere Dispergiermittel Struktureinheiten der Formeln (Ic) und (IIa) aufweist.

39. Zusammensetzung nach einer der Ausführungsformen 1 bis 28, wobei das polymere Dispergiermittel Struktureinheiten der Formeln (Ia), (Ic) und (IIa) aufweist.

40. Zusammensetzung nach einer der Ausführungsformen 1 bis 28, wobei das polymere Dispergiermittel aufgebaut ist aus (i) anionischen oder anionogenen Struktureinheiten, die abgeleitet sind von Acrylsäure, Methacrylsäure, Maleinsäure, Hydroxyethylacrylatphosphorsäureester, und/oder Hydroxyethylmethacrylatphosphorsäureester, Hydroxyethylacrylat-Phosphorsäurediester, und/oder Hydroxyethylmethacrylat-Phosphorsäurediester und (ii) Polyetherseitenkettenstruktureinheiten, die abgeleitet sind von $C_1$-$C_4$-Alkyl-polyethylenglykolacrylsäureester, Polyethylenglykolacrylsäureester,$C_1$-$C_4$-Alkyl-polyethylenglykolmethacrylsäureester, Polyethylenglykolmethacrylsäureester, $C_1$-$C_4$-Alkyl-polyethylenglykolacrylsäureester, Polyethylenglykolacrylsäureester, Vinyloxy-$C_2$-$C_4$-alkylen-polyethylenglykol, Vinyloxy-$C_2$-$C_4$-alkylen-polyethylenglykol-$C_1$-$C_4$-alkylether, Allyloxy-polyethylenglykol, Allyloxy-polyethylenglykol-$C_1$-$C_4$-alkylether, Methallyloxy-polyethylen-glykol, Methallyloxy-polyethylenglykol-$C_1$-$C_4$-alkylether, Isoprenyloxy-polyethylenglykol und/oder Isoprenyloxy-polyethylenglykol-$C_1$-$C_4$-alkylether.

41. Zusammensetzung nach Ausführungsform 40, wobei das polymere Dispergiermittel aufgebaut ist aus Struktureinheiten (i) und (ii), die abgeleitet sind von

(i) Hydroxyethylacrylatphosphorsäureester und/oder Hydroxyethylmethacrylatphosphorsäureester und (ii) $C_1$-$C_4$-Alkyl-polyethylenglykolacrylsäureester und/oder $C_1$-$C_4$-Alkyl-polyethylenglykolmethacrylsäureester; oder

(i) Acrylsäure und/oder Methacrylsäure und (ii) $C_1$-$C_4$-Alkyl-polyethylenglykolacryl-säureester und/oder $C_1$-$C_4$-Alkyl-polyethylenglykolmethacrylsäureester; oder

(i) Acrylsäure, Methacrylsäure und/oder Maleinsäure und (ii) Vinyloxy-$C_2$-$C_4$-alkylen-polyethylenglykol, Allyloxy-polyethylenglykol, Methallyloxy-polyethylen-glykol und/oder Isoprenyloxy-polyethylenglykol.

42. Zusammensetzung nach Ausführungsform 40, wobei das polymere Dispergiermittel aufgebaut ist aus Struktureinheiten (i) und (ii), die abgeleitet sind von

(i) Hydroxyethylmethacrylatphosphorsäureester und (ii) $C_1$-$C_4$-Alkyl-polyethylenglykolmethacrylsäureester oder Polyethylenglykolmethacrylsäureester; oder

(i) Methacrylsäure und (ii) $C_1$-$C_4$-Alkyl-polyethylenglykolmethacrylsäureester oder Polyethylenglykolmethacrylsäureester ; oder

(i) Acrylsäure und Maleinsäure und (ii) Vinyloxy-$C_2$-$C_4$-alkylen-polyethylenglykol oder

(i) Acrylsäure und Maleinsäure und (ii) Isoprenyloxy-polyethylenglykol oder

(i) Acrylsäure und (ii) Vinyloxy-$C_2$-$C_4$-alkylen-polyethylenglykol oder

(i) Acrylsäure und (ii) Isoprenyloxy-polyethylenglykol oder

(i) Acrylsäure und (ii) Methallyloxy-polyethylenglykol oder

(i) Maleinsäure und (ii) Isoprenyloxy-polyethylenglykol oder

(i) Maleinsäure und (ii) Allyloxy-polyethylenglykol oder

(i) Maleinsäure und (ii) Methallyloxy-polyethylenglykol.

43. Zusammensetzung nach einer der Ausführungsformen 23 bis 28, wobei das Molverhältnis der Struktureinheiten (I) : (II) 1:4 bis 15:1, insbesondere 1:1 bis 10:1, beträgt.

44. Zusammensetzung nach einer der Ausführungsformen 29 bis 35, wobei das Molverhältnis der Struktureinheiten (III): (IV) 4:1 bis 1:15, insbesondere 2:1 bis 1:10, beträgt.

45. Zusammensetzung nach einer der Ausführungsformen 34 bis 35, wobei das Molverhältnis der Struktureinheiten (III + IV) : (V) 2:1 bis 1:3, insbesondere 1:0,8 bis 1:2, beträgt.

46. Zusammensetzung nach einer der Ausführungsformen 29 bis 35 oder 45, wobei das polymere Dispergiermittel aufgebaut ist aus Struktureinheiten der Formeln (III) und (IVa), worin T und D für Phenyl oder Naphthyl steht, wobei das Phenyl oder Naphthyl gegebenenfalls durch 1 oder 2 $C_1$-$C_4$-Alkyl-, Hydroxy- oder 2 $C_1$-$C_4$-Alkoxygruppen substituiert ist, B und E für O stehen, A für $C_xH_{2x}$ mit x = 2 steht, a für 3 bis 150, insbesondere 10 bis 150, steht, und b für 1, 2 oder 3 steht.

47. Zusammensetzung nach einem der vorhergehenden Ausführungsformen, dadurch gekennzeichnet, dass es sich bei dem Bindemittel auf Basis von Calciumsulfat um $\alpha$-Halbhydrat, $\alpha$ /$\beta$-Halbhydrat, $\beta$-Halbhydrat, natürliches Anhydrit, synthetisches Anhydrit, aus der Rauchgasentschwefelung erhaltenes Anhydrit, und/oder Mischungen von zwei oder mehreren davon handelt.

48. Zusammensetzung nach einer der vorhergehenden Ausführungsformen, dadurch gekennzeichnet, dass diese mindestens ein weiteres Bindemittel aus der Reihe Portlandzement, Weißzement, Calciumaluminatzement, Calciumsulfoaluminatzement und puzzolanische Bindemittel wie z. B. Flugasche, Metakaolin, Silicastaub und Hüttensand umfasst.

49. Zusammensetzung nach einer der vorhergehenden Ausführungsformen, dadurch gekennzeichnet, dass diese mindestens eine Verbindung aus der Reihe Quarzsand, Quarzmehl, Kalkstein, Schwerspat, Calcit, Aragonit, Vaterit, Dolomit, Talkum, Kaolin, Glimmer, Kreide, Titandioxid, Rutil, Anatas, Aluminiumhydroxid, Aluminiumoxid, Magnesiumhydroxid und Brucit umfasst.

50. Verfahren zur Herstellung einer Zusammensetzung nach einem der vorhergehenden Ausführungsformen, dadurch gekennzeichnet, dass

a) das wenigstens eine wasserlösliche Salz eines mehrwertigen Metallkations,
b) die wenigstens eine Verbindung, die ein Anion freizusetzen vermag, das mit dem mehrwertigen Metallkation ein schwerlösliches Salz bildet und

c) das wenigstens eine polymere Dispergiermittel, das anionische und/oder anionogene Gruppen und Polyetherseitenketten umfasst,

in Gegenwart von Wasser miteinander in Kontakt gebracht werden und das so erhaltene Additiv

d) mit den weiteren Komponenten der Zusammensetzung, umfassend das Bindemittel auf Basis von Calciumsulfat,

in Kontakt gebracht wird.

51. Verfahren nach Ausführungsformen 50, wobei das mindestens eine Salz des mehrwertigen Metallkations in Gegenwart des polymeren Dispergiermittels gefällt wird.

52. Verfahren nach Ausführungsformen 50, wobei zunächst das mindestens eine mehrwertigen Metallkation mit der wenigstens einen Verbindung, die ein Anion freizusetzen vermag, in Kontakt gebracht und anschließend das polymere Dispergiermittel zugegeben wird.

53. Verfahren nach einer der Ausführungsformen 50 bis 52, wobei bei der Herstellung des Additivs ein pH-Neutralisierungsmittel zugesetzt wird.

54. Verfahren nach einer der Ausführungsformen 50 bis 53, wobei ein Hydroxid und/oder Oxid des mehrwertigen Metallkations mit einer Säure peptisiert wird, um eine kolloid-disperse Zubereitung des Salzes des mehrwertigen Metallkations zu erhalten.

55. Verfahren nach Ausführungsformen 54, wobei die Säure ausgewählt ist unter Borsäure, Kohlensäure, Oxalsäure, Kieselsäure, Schwefelsäure, Polyphosphorsäure, Phosphorsäure und/oder Phosphoriger Säure.

56. Verfahren nach Ausführungsformen 54, wobei die saure Form des polymeren Dispergiermittels zur Peptisierung des Hydroxids und/oder Oxids des mehrwertigen Metallkations eingesetzt wird.

57. Verfahren nach einer der Ausführungsformen 50 bis 56, wobei das wenigstens eine wasserlösliche Salz eines mehrwertigen Metallkations ein $Al^{3+}$-Salz umfasst.

58. Verfahren nach einer der Ausführungsformen 50 bis 56, wobei das wenigstens eine wasserlösliche Salz eines mehrwertigen Metallkations ein $Fe^{3+}$-Salz umfasst.

59. Verfahren nach einer der Ausführungsformen 50 bis 56, wobei das wenigstens eine wasserlösliche Salz eines mehrwertigen Metallkations ein $Fe^{2+}$-Salz umfasst.

60. Verfahren nach einer der Ausführungsformen 50 bis 56, wobei das wenigstens eine wasserlösliche Salz eines mehrwertigen Metallkations ein $Ca^{2+}$-Salz umfasst.

61. Verfahren nach einer der Ausführungsformen 50 bis 60, wobei es sich bei dem Anion um mindestens eines aus der Gruppe Carbonat, Oxalat, Silikat, Phosphat, Polyphosphat, Phosphit, Borat, Aluminat, Ferrat, Zinkat und Sulfat, insbesondere Phosphat oder Aluminat handelt.

62. Verfahren nach Ausführungsform 61, wobei das Anion Phosphat ist und das Verhältnis nach Formel (b) im Bereich von 0,1 bis 2 liegt.

63. Verfahren nach Ausführungsform 61, wobei das Anion Phosphat ist und das Verhältnis nach Formel (b) im Bereich von 0,1 und 1,0 liegt.

64. Verfahren nach Ausführungsform 61, wobei das Anion Phosphat ist und das Verhältnis nach Formel (b) im Bereich von 0,2 bis 0,75 liegt.

65. Verfahren nach Ausführungsform 61, wobei das Anion Aluminat ist und das Verhältnis nach Formel (b) im Bereich von 0,1 bis 2 liegt.

66. Verfahren nach Ausführungsform 61, wobei das Anion Aluminat ist und das Verhältnis nach Formel (b) im Bereich von 0,1 und 1,0 liegt.

67. Verfahren nach Ausführungsform 61, wobei das Anion Aluminat ist und das Verhältnis nach Formel (b) im Bereich von 0,2 bis 0,75 liegt.

68. Verwendung des Additivs in einer Zusammensetzung nach einer der Ausführungsformen 1 bis 49 als Konsistenz-Erhalter.

69. Verwendung einer Zusammensetzung nach einer der Ausführungsformen 1 bis 49 als Calciumsulfat-Fließestrich, fließfähige Calciumsulfat-Spachtelmasse und erdfeuchter Calciumsulfat-Estrich.

Die Summe über das Produkt aus Ladungszahl $z_{s,j}$ und Molzahl $n_{s,j}$ in mmol/g des polymeren Dispergiermittels kann nach verschiedenen bekannten Verfahren bestimmt werden, beispielsweise durch die Bestimmung durch Ladungsdichtetitration mit einem Polykation wie z.B. beschrieben in J. Plank et al., Cem. Conr. Res. 2009, 39, 1-5. Weiterhin ist der mit dem Stand der Technik vertraute Fachmann in der Lage, diesen Wert aus den Monomereinwaagen für die Synthese des polymeren Dispergiermittels in einfacher Rechnung zu bestimmen. Schließlich ist es möglich den Zahlenwert der Summe über das Produkt aus $z_s$ und $n_s$ experimentell zu erhalten, indem durch Kernresonanzspektroskopie (NMR) die Verhältnisse der Polymerbausteine bestimmt werden. Dafür nutzt man insbesondere die Integration der Signale im $^1$H-NMR Spektrum eines gelösten polymeren Dispergiermittels.
Das mehrwertige Metallkation ist vorzugsweise ausgewählt unter $Al^{3+}$, $Fe^{3+}$, $Fe^{2+}$, $Zn^{2+}$, $Mn^{2+}$, $Cu^{2+}$, $Ca^{2+}$, $Mg^{2+}$, $Sr^{2+}$, $Ba^{2+}$ und Gemischen davon, bevorzugt ausgewählt unter $Al^{3+}$, $Fe^{3+}$, $Fe^{2+}$, $Mn^{2+}$, $Zn^{2+}$, $Ca^{2+}$ und Gemischen davon, besonders bevorzugt ausgewählt unter $Al^{3+}$, $Fe^{3+}$, $Fe^{2+}$, $Ca^{2+}$ und Gemischen davon.
Bevorzugt ist das Gegenanion des mindestens einen wasserlöslichen Salzes des mehrwertigen Metallkations so gewählt, dass die Salze gut wasserlöslich sind, bevorzugt ist die Löslichkeit in Wasser bei 20 °C, pH 3 und Normaldruck größer als 10 g/l, besonders bevorzugt größer als 100 g/l und insbesondere bevorzugt größer als 200 g/l. Der Zahlenwert der Löslichkeit bezieht sich dabei auf die Gesamtmasse gelöster Metallkationen und Gegenanionen, die sich im Gleichgewichtszustand beim Lösen des wasserlöslichen Salzes in deionisiertem Wasser bei 20°C, pH 3 und Normaldruck einstellt. Die Löslichkeit berücksichtigt nicht die Effekte durch Protonierungsgleichgewichte (pH-Wert) und Komplexierungsgleichgewichte.
Bevorzugt ist das Gegenanion des wasserlöslichen Salzes des mehrwertigen Metallkations einfach geladen und ausgewählt unter Nitrat, Acetat, Formiat, Hydrogensulfat, Halogenid, Halogenat, Cyanid, Azid, Cyanat, Thiocyanat, Fulminat, Methansulfonat und/oder Amidosulfonat. Besonders bevorzugt ist das Gegenanion ausgewählt unter Chlorid und Nitrat. Ganz besonders bevorzugt ist das Gegenanion Nitrat. Auch Doppelsalze können als Salze mehrwertiger Metallkationen eingesetzt werden. Doppelsalze sind Salze, welche mehrere verschiedene Kationen aufweisen. Beispielhaft genannt sei der Alaun ($KAl(SO_4)_2 \cdot 12H_2O$), welcher als Aluminiumsalz geeignet ist. Die Salze mehrwertiger Metallkationen mit den vorstehend genannten Gegenanionen sind gut wasserlöslich und damit besonders gut geeignet, da höhere Konzentrationen der wässrigen Metallsalzlösungen (als Edukt) eingestellt werden können.
Anionische Gruppen sind die im polymeren Dispergiermittel enthaltenen deprotonierten Säuregruppen. Anionogene Gruppen sind die im polymeren Dispergiermittel enthaltenen Säuregruppen. Gruppen, die zugleich anionisch und anionogen sind, wie teilweise deprotonierte mehrbasige Säurereste, werden bei der Bildung der Summe der Molzahlen der im polymeren Dispergiermittel enthaltenen anionischen und anionogenen Gruppen ausschließlich den anionischen Gruppen zugerechnet.
Als verschiedenartige mehrwertige Metallkationen werden mehrwertige Metallkationen unterschiedlicher Elemente bezeichnet. Darüber hinaus werden als verschiedenartige mehrwertige Metallkationen auch Metallkationen desselben Elements mit unterschiedlicher Ladungszahl bezeichnet.
Als verschiedenartig werden anionische und anionogene Gruppen des polymeren Dispergiermittels bezeichnet, die sich durch Protonierung nicht ineinander überführen lassen.
Das Verhältnis nach Formel (a)

$$0{,}1 < \frac{\sum_i z_{K,i} \times n_{K,i}}{\sum_j z_{s,j} \times n_{s,j}} \leq 30 \quad \text{(a)}$$

liegt bevorzugt im Bereich von 0,1 bis 25, vorzugsweise 0,3 bis 24, besonders bevorzugt 0,5 bis 23, weiter bevorzugt 0,6 bis 15 und insbesondere bevorzugt im Bereich von 0,75 bis 5.
Das Verhältnis nach Formel (b)

$$0{,}01 < \frac{\sum_l z_{A,l} \times n_{A,l}}{\sum_j z_{K,i} \times n_{K,i}} \leq 3 \quad \text{(b)}$$

liegt bevorzugt zwischen 0,05 und 1,5, besonders bevorzugt zwischen 0,1 und 1,0, insbesondere bevorzugt zwischen 0,15 und 0,8 und ganz besonders bevorzugt zwischen 0,2 und 0,75.

Dabei kann jeder Bereich für Formel (a) mit jedem Bereich für Formel (b) kombiniert werden.

Im Rahmen der vorliegenden Erfindung wird als schwerlösliches Salz ein Salz bezeichnet, dessen Löslichkeit in Wasser bei 20 °C, pH 9 und Normaldruck kleiner als 5 g/l, bevorzugt kleiner als 1 g/l ist.

Als wasserlösliches Salz wird ein Salz bezeichnet, dessen Löslichkeit in Wasser bei 20 °C, pH 3 und Normaldruck größer als 5 g/l ist.

Bei dem Anion handelt es sich bevorzugt um mindestens eines aus der Gruppe Carbonat, Oxalat, Silikat, Phosphat, Polyphosphat, Phosphit, Borat, Aluminat, Ferrat, Zinkat und Sulfat, bevorzugt Carbonat, Silikat, Phosphat, Aluminat, Ferrat und Zinkat. Besonders bevorzugt handelt es sich bei dem Anion um Phosphat oder Aluminat.

Zu den genannten Anionen zählen auch die polymeren Bor-, Silikat-, und Oxalatanionen sowie die Polyphosphate. Unter dem Begriff "polymere Anionen" sind Anionen zu verstehen, welche neben Sauerstoffatomen mindestens zwei Atome aus der Reihe Bor, Kohlenstoff, Silicium und Phosphor umfassen. Besonders bevorzugt handelt es sich um Oligomere mit einer Anzahl von Atomen zwischen 2 und 20, insbesondere bevorzugt 2 bis 14 Atomen, am meisten bevorzugt 2 bis 5 Atomen. Die Anzahl der Atome liegt bei den Silikaten besonders bevorzugt im Bereich von 2 bis 14 Siliciumatomen und bei den Polyphosphaten besonders bevorzugt im Bereich von 2 bis 5 Phosphoratomen.

Als Verbindung, die ein Silikat freizusetzen vermag ist $Na_2SiO_3$ und Wasserglas mit einem Modul, definiert als das Verhältnis von $SiO_2$ zu Alkalioxid, im Bereich von 1 / 1 zu 4 / 1, besonders bevorzugt 1 / 1 zu 3/1.

Bei den Silikaten ist es möglich, dass ein Teil der Siliciumatome der Silikate durch Aluminium ersetzt wird. Aus der Klasse der Aluminosilicate sind entsprechende Verbindungen bekannt. Bevorzugt ist der Anteil von Aluminium kleiner als 10 mol % bezogen auf die Summe von Silicium und Aluminium, besonders bevorzugt ist der Aluminiumanteil gleich null.

Es hat sich als vorteilhaft erwiesen, wenn das Anion Phosphat ist und das Verhältnis nach Formel (b) im Bereich von 0,1 bis 2 liegt.

Es hat sich weiter als vorteilhaft erwiesen, wenn das Anion Phosphat ist und das Verhältnis nach Formel (b) im Bereich von 0,1 bis 1,0 liegt.

Es hat sich als besonders vorteilhaft erwiesen, wenn das Anion Phosphat ist und das Verhältnis nach Formel (b) im Bereich von 0,2 bis 0,75 liegt.

Es hat sich in einer weiteren Ausführungsform als vorteilhaft erwiesen, wenn das Anion Aluminat ist und das Verhältnis nach Formel (b) im Bereich von 0,1 bis 2 liegt.

Es hat sich weiter als vorteilhaft erwiesen, wenn das Anion Aluminat ist und das Verhältnis nach Formel (b) im Bereich von 0,1 bis 1,0 liegt.

Es hat sich als besonders vorteilhaft erwiesen, wenn das Anion Aluminat ist und das Verhältnis nach Formel (b) im Bereich von 0,2 bis 0,75 liegt.

Bevorzugt ist das Gegenkation der Verbindung, die das Anion freizusetzen vermag, ein einfach geladenes Kation bzw. ein Proton, bevorzugt ein Alkalimetallkation und/oder Ammoniumion und/oder ein Proton, besonders bevorzugt ein Proton. Das Ammoniumion kann auch ein organisches Ammoniumion umfassen, beispielsweise Alkylammoniumionen mit ein bis vier Alkylresten. Der organische Rest kann auch aromatischer Natur sein oder aromatische Reste umfassen. Das Ammoniumion kann auch ein Alkanolammoniumion sein.

Das Additiv für hydraulisch abbindende Massen kann zusätzlich wenigstens ein pH-Neutralisierungsmittel umfassen.

Bevorzugt ist das pH-Neutralisierungsmittel ein Alkalimetallhydroxid, ein organisches Monoamin, ein organisches Diamin, ein organisches Polyamin oder Ammoniak. Geeignete organische Amine sind insbesondere ein aliphatisches Monoamin, aliphatisches Diamin oder ein aliphatisches Polyamin. Polyamine sind auch Triamine.

Weiterhin bevorzugt ist das pH-Neutralisierungsmittel ausgewählt aus Natriumhydroxid, Kaliumhydroxid, Ammoniak, Mono-hydroxy-$C_1$-$C_4$-alkylaminen, Di-hydroxy-$C_1$-$C_4$-alkylaminen, Trihydroxy-$C_1$-$C_4$-alkylaminen, Mono-$C_1$-$C_4$-alkylaminen, Di-$C_1$-$C_4$-alkylaminen, Tri-$C_1$-$C_4$-alkylaminen, $C_1$-$C_4$-Alkylendiaminen, (Tetra-hydroxy-$C_1$-$C_4$-alkyl)-$C_1$-$C_4$-alkylendiaminen, Polyethylenaminen, Polypropylenaminen und Gemischen davon.

Besonders bevorzugt ist das pH-Neutralisierungsmittel ausgewählt aus Natriumhydroxid, Kaliumhydroxid, Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, $C_1$-$C_4$-Alkylendiaminen, Polyethylenaminen und Gemischen davon.

Insbesondere bevorzugt ist das pH-Neutralisierungsmittel ausgewählt aus Natriumhydroxid, Kaliumhydroxid, Ammoniak, Ethylendiamin, Monoethanolamin, Diethanolamin, Triethanolamin, Polyethylenaminen und Gemischen davon.

Ganz besonders bevorzugt ist das pH-Neutralisierungsmittel ausgewählt aus Natriumhydroxid und Kaliumhydroxid und Gemischen davon. Am meisten bevorzugt ist das pH-Neutralisierungsmittel Natriumhydroxid.

Vorzugsweise weist eine 1 molare Suspension des Additivs in Wasser einen pH-Wert von 2 bis 12, vorzugsweise 3 bis 11 und insbesondere 4 bis 10 auf.

In einer Ausführungsform weist das polymere Dispergiermittel zumindest eine Struktureinheit der allgemeinen Formeln (Ia), (Ib), (Ic) und/oder (Id) auf, wobei die Struktureinheiten (Ia), (Ib), (Ic) und (Id) sowohl innerhalb einzelner Polymermoleküle, als auch zwischen verschiedenen Polymermolekülen gleich oder verschieden sein können.

(Ia)

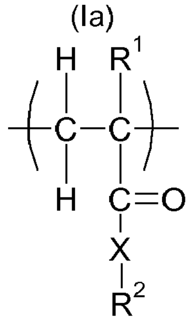

worin

- $R^1$ für H oder eine unverzweigte oder verzweigte $C_1$-$C_4$-Alkylgruppe, $CH_2COOH$ oder $CH_2CO$-X-$R^2$ steht;
- X für $NR^3$-$(C_nH_{2n})$ oder O-$(C_nH_{2n})$ mit n = 1, 2, 3 oder 4 steht, wobei das Stickstoffatom bzw. das Sauerstoffatom an die CO-Gruppe gebunden ist;
- $R^2$ für $PO_3M_2$, O-$PO_3M_2$, $(C_6H_4)$-$PO_3M_2$ oder $(C_6H_4)$-$OPO_3M_2$ steht; oder X für eine chemische Bindung und $R^2$ für OM stehen;
- $R^3$ für H, $C_1$-$C_6$-Alkyl, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$ oder $(C_nH_{2n})$-O-$(AO)_\alpha$-$R^4$ steht;
- $\alpha$ für eine ganze Zahl von 1 bis 350 steht;
- $R^4$ für H oder eine unverzweigte oder verzweigte $C_1$-$C_4$-Alkylgruppe steht; und
- M unabhängig voneinander für H oder ein Kationäquivalent steht;

(Ib)

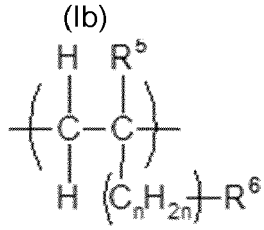

worin

- $R^5$ für H oder eine unverzweigte oder verzweigte $C_1$-$C_4$-Alkylgruppe steht;
- n für 0, 1, 2, 3 oder 4 steht;
- $R^6$ für $PO_3M_2$ oder O-$PO_3M_2$ steht; und
- M unabhängig voneinander für H oder ein Kationäquivalent steht;

(Ic)

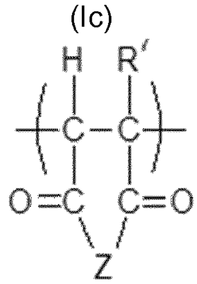

worin

$R^7$ für H oder eine unverzweigte oder verzweigte $C_1$-$C_4$-Alkylgruppe steht;
Z für O oder $NR^8$ steht; und
$R^8$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht,
n für 1, 2, 3 oder 4 steht, und
M unabhängig voneinander für H oder ein Kationäquivalent steht;

(Id)

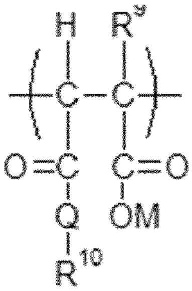

worin

$R^9$ für H oder eine unverzweigte oder verzweigte $C_1$-$C_4$-Alkylgruppe steht;
Q für $NR^{10}$ oder O steht;
$R^{10}$ für H, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$ oder $(C_nH_{2n})$-O-$(AO)_\beta$-$R^{11}$ steht,
A für $C_xH_{2x}$ mit x = 2, 3, 4 oder 5 oder $CH_2CH(C_6H_5)$ steht;
β für eine ganze Zahl von 1 bis 350 steht;
$R^{11}$ für H oder eine unverzweigte oder verzweigte $C_1$-$C_4$-Alkylgruppe steht;
n für 1, 2, 3 oder 4 steht; und
M unabhängig voneinander für H oder ein Kationäquivalent steht.

Besonders bevorzugt handelt es sich bei der Struktureinheit nach Formel (Ia) um eine Methacrylsäure- oder Acrylsäure-Einheit, bei der Struktureinheit nach Formel (Ic) um eine Maleinsäureanhydrid-Einheit und bei der Struktureinheit nach Formel (Id) um eine Maleinsäure- oder eine Maleinsäuremonoester-Einheit.

Soweit die Monomere (I) Phosphorsäureester oder Phosphonsäureester sind, können sie auch die entsprechenden Di- und Triester sowie den Monoester der Diphosphorsäure umfassen. Diese entstehen im allgemeinen bei der Veresterung von organischen Alkoholen mit Phosphorsäure, Polyphosphorsäure, Phosphoroxiden, Phosphorhalogeniden oder Phosphoroxyhalogeniden bzw. den entsprechenden Phosphonsäureverbindungen neben dem Monoester in unterschiedlichen Anteilen, beispielsweise 5-30 Mol-% Diester und 1-15 Mol-% Triester sowie 2-20 Mol-% des Monoesters der Diphosphorsäure.

In einer Ausführungsform weist das polymere Dispergiermittel zumindest eine Struktureinheit der allgemeinen Formeln (IIa), (IIb), (IIc) und/oder (IId) auf. Die allgemeinen Formeln (IIa), (IIb), (IIc) und (IId) können sowohl innerhalb einzelner Polymermoleküle, als auch zwischen verschiedenen Polymermolekülen gleich oder verschieden sein. Alle Struktureinheiten A können sowohl innerhalb einzelner Polyetherseitenketten, als auch zwischen verschiedenen Polyetherseitenketten gleich oder verschieden sein.

(IIa)

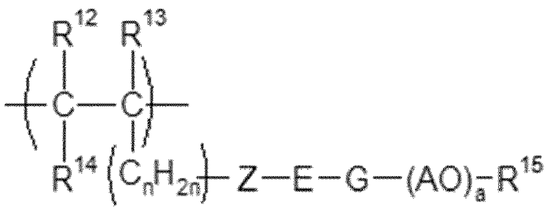

worin

$R^{12}$, $R^{13}$ und $R^{14}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht;
G für O, NH oder CO-NH steht; oder
E und G gemeinsam für eine chemische Bindung stehen;
Z für O oder S steht;
A für $C_xH_{2x}$ mit x = 2, 3, 4 oder 5 oder $CH_2CH(C_6H_5)$ steht;
n für 0, 1, 2, 3, 4 und/oder 5 steht;
a für eine ganze Zahl von 2 bis 350 steht; und
$R^{15}$ für H, eine unverzweigte oder verzweigte $C_1$-$C_4$-Alkylgruppe, CO-$NH_2$ und/oder $COCH_3$ steht;

(IIb)

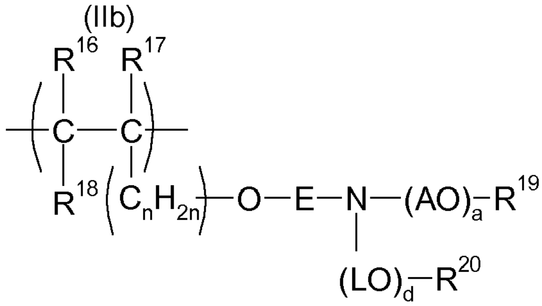

worin

$R^{16}$, $R^{17}$ und $R^{18}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht;
A für $C_xH_{2x}$ mit x = 2, 3, 4 oder 5 oder $CH_2CH(C_6H_5)$ steht;
L für $C_xH_{2x}$ mit x = 2, 3, 4 oder 5 oder $CH_2$-$CH(C_6H_5)$ steht;
a für eine ganze Zahl von 2 bis 350 steht;
d für eine ganze Zahl von 1 bis 350 steht;
$R^{19}$ für H oder eine unverzweigte oder verzweigte $C_1$-$C_4$-Alkylgruppe steht;
$R^{20}$ für H oder eine unverzweigte $C_1$-$C_4$-Alkylgruppe steht; und
n für 0, 1, 2, 3, 4 oder 5 steht;

(IIc)

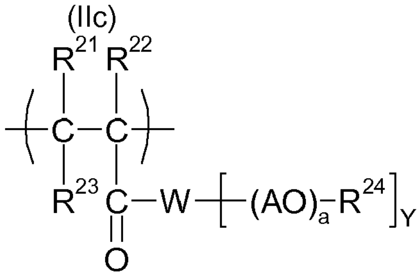

worin

$R^{21}$, $R^{22}$ und $R^{23}$ unabhängig voneinander für H oder eine unverzweigte oder verzweigte $C_1$-$C_4$-Alkylgruppe stehen;
W für O, $NR^{25}$, N steht
Y für 1 steht, wenn W = O oder $NR^{25}$, und für 2 steht, wenn W = N;
A für $C_xH_{2x}$ mit x = 2, 3, 4 oder 5 oder $CH_2CH(C_6H_5)$ steht;
a für eine ganze Zahl von 2 bis 350 steht;
$R^{24}$ für H oder eine unverzweigte oder verzweigte $C_1$-$C_4$-Alkylgruppe steht; und
$R^{25}$ für H oder eine unverzweigte oder verzweigte $C_1$-$C_4$-Alkylgruppe steht;

(IId)

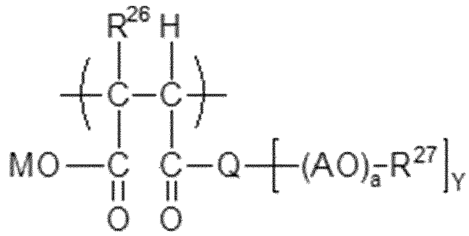

worin

- $R^{26}$ für H oder eine unverzweigte oder verzweigte $C_1$-$C_4$-Alkylgruppe steht;
- Q für $NR^{10}$, N oder O steht;
- Y für 1 steht, wenn Q = O oder $NR^{28}$ und für 2 steht, wenn Q = N;
- $R^{27}$ für H oder eine unverzweigte oder verzweigte $C_1$-$C_4$-Alkylgruppe steht;
- $R^{28}$ für H oder eine unverzweigte oder verzweigte $C_1$-$C_4$-Alkylgruppe steht;
- A für $C_xH_{2x}$ mit x = 2, 3, 4 oder 5, oder $CH_2C(C_6H_5)H$ steht;
- a für eine ganze Zahl von 2 bis 350 steht; und
- M unabhängig voneinander für H oder ein Kationäquivalent steht

Neben den Struktureinheiten der Formeln (I) und (II) kann das polymere Dispergiermittel auch weitere Struktureinheiten enthalten, die sich von radikalisch polymerisierbaren Monomeren ableiten, wie Hydroxyethyl(meth)acrylat, Hydroxypropyl(meth)acrylat, (Meth)acrylamid, ($C_1$-$C_4$)-alkyl(meth)acrylate, Styrol, Styrolsulfonsäure, 2-Acrylamido-2-methylpropansulfonsäure, (Meth)allylsulfonsäure, Vinylsulfonsäure, Vinylacetat, Acrolein, N-Vinylformamid, Vinylpyrrolidon, (Meth)allylalkohol, Isoprenol, 1-Butylvinylether, Isobutylvinylether, Aminopropyvinylether, Ethylenglykolmonovinylether, 4-Hydroxybutylmonovinyl-ether, (Meth)acrolein, Crotonaldehyd, Dibutylmaleat, Dimethylmaleat, Diethylmaleat und Dipropylmaleat.

Das durch Gelpermeationschromatographie (GPC) bestimmte mittlere Molekulargewicht $M_w$ des polymeren Dispergiermittels, bevorzugt des wasserlöslichen polymeren Dispergiermittels, beträgt vorzugsweise 5,000 bis 200,000 g/mol, besonders bevorzugt 10,000 bis 80,000 g/mol, und ganz besonders bevorzugt 20,000 bis 70,000 g/mol. Die mittlere Molmasse der Polymere wird mittels Größenausschlusschromatographie bestimmt (Säulenkombinationen: OH-Pak SB-G, OH-Pak SB 804 HQ und OH-Pak SB 802.5 HQ von Shodex, Japan; Elutionsmittel: 80Vol.-% wässrige Lösung von $HCO_2NH_4$ (0,05 mol/l) und 20 Vol.-% Acetonitril; Injektionsvolumen 100 $\mu$l; Durchflussrate 0,5 ml/min). Die Kalibrierung zur Bestimmung der mittleren Molmasse erfolgte mit linearen Poly(ethylenoxid)- und Polyethylenglykol-Standards. Als Maß für den Umsatz kann der Peak des Copolymers auf eine relative Höhe von 1 normiert und die Höhe des Peaks des nichtumgesetzten Makromonomer/PEG-haltigen Oligomers als Maß für den Restmonomerengehalt verwendet werden.

Vorzugsweise erfüllt das polymere Dispergiermittel die Anforderungen der Industrienorm EN 934-2 (Februar 2002).

Die Herstellung der polymeren Dispergiermittel, welche die Struktureinheiten (I) und (II) enthalten, erfolgt in üblicher Weise, beispielsweise durch radikalische Polymerisation. Sie ist z. B. beschrieben in EP0894811, EP1851256, EP2463314 und EP0753488.

In einer Ausführungsform ist das polymere Dispergiermittel ein Polykondensationsprodukt, das die Struktureinheiten (III) und (IV) umfasst.

(III)

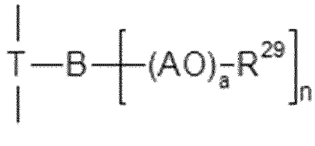

worin

T für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;

n für 1 oder 2 steht;

B für N, NH oder O steht, mit der Maßgabe, dass n für 2 steht, wenn B für N steht und der Maßgabe, dass n für 1 steht, wenn B für NH oder O steht;

A für $C_xH_{2x}$ mit x = 2, 3, 4 oder 5 oder $CH_2CH(C_6H_5)$ steht;

a für eine ganze Zahl von 1 bis 300 steht; und

$R^{29}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen,

wovon 1 oder 2 Atome Heteroatome sind, die ausgewählt sind unter N, O und S, steht;
wobei die Struktureinheit (IV) ausgewählt ist unter den Struktureinheiten (IVa) und (IVb):

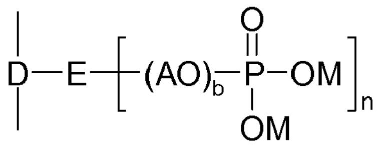

(IVa)

worin

D für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;

E für N, NH oder O steht, mit der Maßgabe, dass n für 2 steht, wenn E für N steht und der Maßgabe, dass n für 1 steht, wenn E für NH oder O steht;

A für $C_xH_{2x}$ mit x = 2, 3, 4 oder 5 oder $CH_2CH(C_6H_5)$ steht;

b für eine ganze Zahl von 1 bis 300 steht; und

M unabhängig voneinander für H oder ein Kationäquivalent stehen;

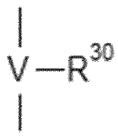

(IVb)

worin

V für einen substituierten oder unsubstituierten Phenyl- oder Naphthylrest steht und gegebenenfalls durch 1 oder zwei Reste substituiert ist, die ausgewählt sind unter $R^{31}$, OH, $OR^{31}$, $(CO)R^{31}$, COOM, $COOR^{31}$, $SO_3R^{31}$ und $NO_2$;

$R^{30}$ für COOM, $OCH_2COOM$, $SO_3M$ oder $OPO_3M_2$ steht;

$R^{31}$ für $C_1$-$C_4$-Alkyl, Phenyl, Naphthyl, Phenyl-$C_1$-$C_4$-alkyl oder $C_1$-$C_4$-Alkylphenyl; und

M unabhängig voneinander für H oder ein Kationäquivalent stehen.

Die Struktureinheiten T und D in den allgemeinen Formeln (III) und (IVa) des Polykondensationsprodukts sind vorzugsweise abgeleitet von Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl, Phenoxyessigsäure, Salicylsäure, vorzugsweise von Phenyl, wobei T und D unabhängig voneinander gewählt werden können und auch jeweils von einer Mischung der genannten Reste abgeleitet sein können. Die Gruppen B und E stehen unabhängig voneinander vorzugsweise für O. Alle Struktureinheiten A können sowohl innerhalb einzelner Polyetherseitenketten, als auch zwischen verschiedenen Polyetherseitenketten gleich oder verschieden sein. A steht in einer besonders bevorzugten Ausführungsform für $C_2H_4$.

In der allgemeinen Formel (III) steht a vorzugsweise für eine ganze Zahl von 3 bis 200 und insbesondere 5 bis 150, und in der allgemeinen Formel (IV) steht b vorzugsweise für eine ganze Zahl von 1 bis 300, insbesondere 1 bis 50 und besonders bevorzugt 1 bis 10. Weiterhin können die Reste der allgemeinen Formeln (III) oder (IV) unabhängig voneinander jeweils die gleiche Kettenlänge besitzen, wobei a und b jeweils durch eine Zahl repräsentiert wird. Es wird

dabei in der Regel zweckmäßig sein, wenn jeweils Mischungen mit unterschiedlichen Kettenlängen vorliegen, so dass die Reste der Struktureinheiten im Polykondensationsprodukt für a und unabhängig für b unterschiedliche Zahlenwerte aufweisen.

Häufig weist das erfindungsgemäße Polykondensationsprodukt ein gewichtsmittleres Molekulargewicht von 5.000 g/mol bis 200.000 g/mol, vorzugsweise 10.000 bis 100.000 g/mol und besonders bevorzugt 15.000 bis 55.000 g/mol auf.

Das Molverhältnis der Struktureinheiten (III):(IV) beträgt typischerweise 4:1 bis 1:15 und vorzugsweise 2:1 bis 1:10. Es ist vorteilhaft, über einen relativ hohen Anteil an Struktureinheiten (IV) im Polykondensationsprodukt zu verfügen, da eine verhältnismäßig hohe negative Ladung der Polymere einen guten Einfluss auf die Stabilität der wässrigen Zubereitung hat. Das Mdverhältnis der Struktureinheiten (IVa):(IVb), wenn beide enthalten sind, beträgt typischerweise 1:10 bis 10:1 und vorzugsweise 1:3 bis 3:1.

In einer bevorzugten Ausführungsform der Erfindung enthält das Polykondensationsprodukt eine weitere Struktureinheit (V), die durch die folgende Formel repräsentiert wird:

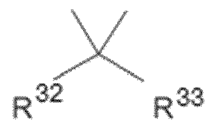

(V)

worin

$R^{32}$ für H, $CH_3$, COOH oder substituiertes oder unsubstituiertes Phenyl oder Naphthyl steht;
$R^{33}$ für H, $CH_3$, COOH oder substituiertes oder unsubstituiertes Phenyl oder Naphthyl steht.

Vorzugsweise stehen $R^{32}$ und $R^{33}$ für H oder einer der Reste $R^{32}$ und $R^{33}$ steht für H und der andere für $CH_3$.

Typischerweise sind $R^{32}$ und $R^{33}$ in Struktureinheit (V) gleich oder verschieden und stehen für H, COOH und/oder Methyl. Ganz besonders bevorzugt ist H.

In einer weiteren Ausführungsform beträgt das Molverhältnis der Struktureinheiten [(III) + (IV)] : (V) im Polykondensat 2:1 bis 1:3.

Die Polykondensate werden typischerweise nach einem Verfahren hergestellt, bei dem man die Verbindungen miteinander umsetzt, die den Struktureinheiten (III), (IV) und (V) zugrunde liegen. Die Herstellung der Polykondensate ist beispielsweise beschrieben in WO 2006/042709 und WO 2010/026155.

Vorzugsweise ist das Monomer mit einer Ketogruppe ein Aldehyd oder Keton. Beispiele für Monomere der Formel (V) sind Formaldehyd, Acetaldehyd, Aceton, Glyoxylsäure und/oder Benzaldehyd. Formaldehyd ist bevorzugt.

Das erfindungsgemäße polymere Dispergiermittel kann auch in Form seiner Salze, wie beispielsweise des Natrium-, Kalium-, organischen Ammonium-, Ammonium- und/oder Calciumsalzes, vorzugsweise als Natrium- und/oder Calciumsalz, vorliegen.

Bevorzugt enthalten die erfindungsgemäßen Additive 50 bis 90 Gew.-% Wasser und 10 bis 50 Gew.-% Feststoff, besonders bevorzugt 55 bis 85 Gew.-% Wasser und 15 bis 45 Gew.-% Feststoff. Der Feststoff umfasst dabei das Polymer sowie das erfindungsgemäße schwerlösliche Salz.

Das erfindungsgemäße Additiv kann als wässriges Produkt in Form einer Lösung, Emulsion oder Dispersion oder in fester Form, beispielsweise als Pulver, nach einem Trocknungsschritt, vorliegen. Der Wassergehalt des Additivs in fester Form beträgt dann bevorzugt weniger als 10 Gew.-%, besonders bevorzugt weniger als 5 Gew.-%. Es ist auch möglich, einen Teil des Wassers, vorzugsweise bis zu 10 Gew.-%, durch organische Lösungsmittel zu ersetzen. Vorteilhaft sind Alkohole wie Ethanol, (Iso)propanol und 1-Butanol, einschließlich seiner Isomere. Auch Aceton kann verwendet werden. Durch den Einsatz der organischen Lösungsmittel lassen sich die Löslichkeit und damit das Kristallisationsverhalten der erfindungsgemäßen Salze beeinflussen.

Die Menge des Additivs in der erfindungsgemäßen Zusammensetzung kann insbesondere von 0,01 bis 4 Gew.-%, bevorzugt 0,05 bis 1,5 Gew.-% und insbesondere 0,075 bis 1 Gew.-% betragen.

Bei dem Bindemittel der erfindungsgemäßen Zusammensetzung auf Basis von Calciumsulfat handelt es sich bevorzugt um α-Halbhydrat, α/β-Halbhydrat, β-Halbhydrat, natürliches Anhydrit, synthetisches Anhydrit, aus der Rauchgasentschwefelung erhaltenes Anhydrit, und/oder Mischungen von zwei oder mehreren davon. Insbesondere kann die Menge des Bindemittels auf Basis von Calciumsulfat, bezogen auf die Gesamtmasse der Zusammensetzung, mindestens 25 Gew.-%, bevorzugt mindestens 35 Gew.-%, insbesondere bevorzugt mindestens 50 Gew.%, und insbesondere mindestens 75 Gew.-% betragen.

In einer weiteren Ausführungsform kann die erfindungsgemäße Zusammensetzung mindestens ein weiteres Bindemittel aus der Reihe Portlandzement, Weißzement, Calciumaluminatzement, Calciumsulfoaluminatzement und

puzzolanische Bindemittel wie z. B. Flugasche, Metakaolin, Silicastaub und Hüttensand umfassen. Insbesondere kann die Menge dieses weiteren Bindemittels bis zu 75 Gew.-%, bevorzugt bis zu 50 Gew.-%, insbesondere bevorzugt bis zu 25 Gew.%, und insbesondere bis zu 15 Gew.-% betragen. In einer weiteren Ausführungsform enthält die erfindungsgemäße Zusammensetzung neben dem Bindemittel auf Basis von Calciumsulfat keine weiteren anorganischen Bindemittel.

Die erfindungsgemäße Zusammensetzung kann weiterhin mindestens eine Verbindung aus der Reihe Quarzsand, Quarzmehl, Kalkstein, Schwerspat, Calcit, Aragonit, Vaterit, Dolomit, Talkum, Kaolin, Glimmer, Kreide, Titandioxid, Rutil, Anatas, Aluminiumhydroxid, Aluminiumoxid, Magnesiumhydroxid und Brucit umfassen.

Die vorliegende Erfindung sieht weiterhin ein Verfahren zur Herstellung der erfindungsgemäßen Zusammensetzung vor, wobei

a) das wenigstens eine wasserlösliche Salz eines mehrwertigen Metallkations,
b) die wenigstens eine Verbindung, die ein Anion freizusetzen vermag, das mit dem mehrwertigen Metallkation ein schwerlösliches Salz bildet und
c) das wenigstens eine polymere Dispergiermittel, das anionische und/oder anionogene Gruppen und Polyetherseitenketten umfasst,

in Gegenwart von Wasser miteinander in Kontakt gebracht werden und das so erhaltene Additiv
d) mit den weiteren Komponenten der Zusammensetzung, umfassend das Bindemittel auf Basis von Calciumsulfat,

in Kontakt gebracht wird.

In einer besonders bevorzugten Ausführungsform umfasst das erfindungsgemäße Verfahren einen Trocknungsschritt zur Herstellung des Additivs. Insbesondere kann die Trocknung durch Walzentrocknung, Sprühtrocknung, Trocknung im Wirbelbettverfahren, durch Substanztrocknung bei erhöhter Temperatur oder sonstige übliche Trocknungsverfahren erfolgen. Der bevorzugte Bereich der Trocknungstemperatur liegt zwischen 50 und 230 °C.

Die Herstellung der erfindungsgemäßen Additive erfolgt bevorzugt durch Kontaktieren des mindestens einen wasserlöslichen Salzes des mehrwertigen Metallkations und des polymeren Dispergiermittels in wässrigem Medium, in fester Form oder in einer Polymerschmelze. Das mindestens eine wasserlösliche Salz des Metallkations kann in fester Form, zweckmäßig aber als wässrige Lösung oder Suspension bereitgestellt werden. Es ist daher möglich, das mindestens eine Salz des mehrwertigen Metallkations als Pulver, als wässrige Lösung oder auch als wässrige Aufschlämmung zu einer wässrigen Lösung eines Dispergiermittels zu geben.

Die mindestens eine Verbindung, die ein Anion freizusetzen vermag, kann ebenfalls sowohl in fester Form eingesetzt werden (in-situ Herstellung einer Lösung, bzw. Kontaktieren mit der Polymerschmelze), als auch bevorzugt in Form einer wässrigen Lösung verwendet werden.

Ein erfindungsgemäßes Additiv kann dadurch erhalten werden, dass man das schwerlösliche Salz in Gegenwart des polymeren Dispergiermittels fällt, wobei man eine kolloid-disperse Zubereitung des Salzes erhält. Mit der Fällung des schwerlöslichen Salzes ist hier die Bildung von kolloiddispersen Salzpartikeln bezeichnet, die durch das polymere Dispergiermittel dispergiert werden und deren weitere Koagulation verhindert wird.

Unabhängig davon, ob man das Salz des mehrwertigen Metallkations in Gegenwart des polymeren Dispergiermittels fällt oder ob man ein frisch gefälltes Salz des mehrwertigen Metallkations in Gegenwart des polymeren Dispergiermittels dispergiert, kann das erfindungsgemäße Additiv auch dadurch erhalten werden, dass man die Zubereitung zusätzlich mit einem wie oben beschriebenen pH-Neutralisierungsmittel versetzt.

Ein erfindungsgemäßes Additiv kann auch dadurch erhalten werden, dass man ein Hydroxid und/oder Oxid des mehrwertigen Metallkations mit einer Säure peptisiert, wobei die Säure vorzugsweise unter Borsäure, Kohlensäure, Oxalsäure, Kieselsäure, Polyphosphorsäure, Phosphorsäure und/oder Phosphoriger Säure ausgewählt wird.

Die Herstellung des Additivs erfolgt im Allgemeinen durch Vermischen der Komponenten, die vorzugsweise als wässrige Lösung vorliegen. Vorzugsweise werden dabei zunächst das polymere Dispergiermittel und das mindestens eine Salz des mehrwertigen Metallkations vermischt und anschließend wird die mindestens eine Verbindung, die das Anion freizusetzen vermag, das mit dem mehrwertigen Metallkation ein schwerlösliches Salz bildet, zugegeben. Nach einer anderen Ausführungsform werden zunächst das polymere Dispergiermittel und die mindestens eine Verbindung, die das Anion freizusetzen vermag, vermischt und anschließend wird das mindestens eine mehrwertige Metallkation zugegeben. Zur Einstellung des pH-Wertes kann dann eine Säure oder Base zugegeben werden. Das Vermischen der Komponenten erfolgt im Allgemeinen bei einer Temperatur im Bereich von 5 bis 80°C, zweckmäßig 10 bis 40°C und insbesondere bei Raumtemperatur (ca. 20-30°C).

Ein erfindungsgemäßes Additiv kann auch dadurch erhalten werden, dass man ein frisch gefälltes schwerlösliches Salz in Gegenwart des polymeren Dispergiermittels dispergiert. Unter frisch gefällt ist hier unmittelbar im Anschluss an die Fällung zu verstehen, solange das Salz im Wesentlichen amorph (maximal 30 Gew.-%, bevorzugt maximal 15 Gew.-% Kristallinität) vorliegt; d.h. innerhalb von etwa fünf Minuten, vorzugsweise innerhalb von ein oder zwei Minuten

nach der Fällung.

Als "amorph" werden Festkörper bezeichnet, deren atomare Bausteine nicht in Kristallgittern angeordnet sind, d.h. keine Fernordnung aufweisen, sondern lediglich eine mehr oder minder ausgeprägte Nahordnung aufweisen. Während kristalline Substanzen zahlreiche scharfe Reflexe bei der Beugung von Röntgenstrahlen, Elektronenstrahlen und Neutronenstrahlen zeigen, weisen amorphe Festkörper höchstens wenige diffuse Interferenzringe (Halos) bei kleinen Beugungswinkeln auf.

Die Herstellung der Additive kann kontinuierlich oder diskontinuierlich erfolgen. Das Vermischen der Komponenten erfolgt im Allgemeinen in einem Reaktor mit mechanischem Rührwerk. Die Rührgeschwindigkeit des Rührwerks kann dabei zwischen 10 rpm und 2000 rpm liegen. Es ist aber auch möglich, die Lösungen mit Hilfe eines Rotor-Stator Mischers zu vermischen, welcher Rührgeschwindigkeiten im Bereich von 1000 bis 30.000 rpm aufweisen kann. Weiterhin können auch andere Mischgeometrien zur Anwendung kommen, wie z.B. ein kontinuierlicher Prozess bei dem die Lösungen über einen Y-Mischer vermischt werden.

Das in Kontakt bringen des Additivs mit den weiteren Komponenten der Zusammensetzung, umfassend das Bindemittel auf Basis von Calciumsulfat, kann auf jede dem Fachmann hierfür bekannte Art geschehen. Als besonders geeignet hat es sich erwiesen, wenn das flüssige Additiv als Suspension durch Aufsprühen oder Bedüsen mit den weiteren Komponenten der Zusammensetzung in Kontakt gebracht wird, wobei das Verfahren bevorzugt einen Mischschritt umfasst. Auf diese Weise kann die homogene Verteilung in einfacher Weise gewährleistet werden. Selbstverständlich kann das in Kontakt bringen des Additivs mit den weiteren Komponenten der Zusammensetzung auch auf jede andere geeignete Art und Weise erfolgen. In Frage kommen hier insbesondere im Fall eines getrockneten erfindungsgemäßen Additivs, welches bevorzugt in Form eines Pulvers vorliegt, auch das Abmischen bzw. Unterrühren.

Das erfindungsgemäße Additiv kann in der erfindungsgemäßen Zusammensetzung als Konsistenz-Erhalter verwendet werden, wobei das Bindemittel auf Basis von Calciumsulfat bevorzugt ausgewählt ist aus $\alpha$-Halbhydrat, $\alpha/\beta$-Halbhydrat, $\beta$-Halbhydrat, natürliches Anhydrit, synthetisches Anhydrit, aus der Rauchgasentschwefelung erhaltenes Anhydrit, und/oder Mischungen von zwei oder mehreren davon handelt.

Die erfindungsgemäße Zusammensetzung ist in der Regel lagerstabil. Die Zusammensetzung zeigt bevorzugt ihre lange Verarbeitbarkeit auch nach über 6 Monaten. Eine "hohe Lagerstabilität" liegt vor, wenn der Parameter "Delta nach 60 min" wie in den Anwendungstests beschrieben, nach 6-monatiger Lagerung des Additivs zumindest 70 % des Wertes für das frisch hergestellte Additiv beträgt.

Unter dem Begriff des Konsistenz-Erhalters ist in dieser Anmeldung zu verstehen, dass die Additive über eine Verarbeitungszeit von bis zu 90 Minuten, bevorzugt bis zu 60 Minuten, nach Vermischen der erfindungsgemäßen Zusammensetzung mit Wasser ein möglichst für die Bedingungen des jeweiligen Anwendungsfalls ausreichendes, möglichst hohes und insbesondere über den vorstehend genannten Zeitraum im Wesentlichen nicht abfallendes Fließmaß der Bindemittelsuspension bewirken. Die Additive ermöglichen es, ein für die jeweilige Anwendung maßgeschneidertes Eigenschaftsprofil einzustellen.

Die erfindungsgemäßen Zusammensetzungen können zusätzlich zu dem erfindungsgemäßen Additiv aus polymerem Fließmittel, mehrwertigem Metallkation und erfindungsgemäßem Anion noch weitere Komponenten enthalten. Diese weiteren Komponenten umfassen wasserreduzierende Fließmittel wie z.B. Ligninsulfonat, Naphthalinsulfonat-Kondensate, sulfonierte Melaminharze, oder konventionelle Polycarboxylatether, sowie Entschäumer, Luftporenbildner, Verzögerer, Schwundreduzierer und/oder Erhärtungsbeschleuniger.

Die nachfolgenden Beispiele verdeutlichen die Vorteile der vorliegenden Erfindung.

## Beispiele

### Gelpermeationschromatographie

Die Probenpräparation für die Molgewichtsbestimmung erfolgte durch Lösen von Polymerlösung im GPC Puffer, so dass die Polymerkonzentration im GPC-Puffer 0.5 Gew.-% beträgt. Danach wurde diese Lösung über einen Spritzenvorsatzfilter mit Polyethersulfonmembran und Porengröße 0.45 $\mu$m filtriert. Das Injektionsvolumen dieses Filtrats betrug 50 - 100 $\mu$l.

Die Bestimmung der mittleren Molekulargewichte erfolgte auf einem GPC Gerät der Firma Waters mit dem Typnamen Alliance 2690 mit UV-Detektor (Waters 2487) und RI-Detektor (Waters 2410).

| | |
|---|---|
| Säulen: | Shodex SB-G Guard Column for SB-800 HQ series |
| | Shodex OHpak SB 804HQ and 802.5HQ |
| | (PHM gel, 8 x 300 mm, pH 4,0 bis 7,5) |
| Eluent: | 0,05 M wässrige Ammoniumformiat / Methanol-Mischung = 80:20 (Volumenteile) |
| Flußrate: | 0,5 ml/min |

(fortgesetzt)

| | |
|---|---|
| Temperatur: | 50° C |
| Injektion: | 50 bis 100 µl |
| Detektion: | RI und UV |

Molekulargewichte der Polymere wurden mit zwei unterschiedlichen Kalibrierungen bestimmt. Erstens erfolgte die Bestimmung relativ zu Polyethylenglykol Standards der Firma PSS Polymer Standards Service GmbH. Die Molekulargewichtsverteilungskurven der Polyethylenglykolstandards wurden mittels Lichtstreuung bestimmt. Die Massen der Polyethylenglykolstandards betrugen 682 000, 164 000, 114 000, 57 100, 40 000, 26 100, 22 100, 12 300, 6 240, 3 120, 2 010, 970, 430, 194, 106 g/mol.

**Allgemeine Vorschrift Sprühtrocknung**

Die erfindungsgemäßen Additive können durch Sprühtrocknung in Pulverform überführt werden. Dabei werden die wässrigen Lösungen bzw. Suspensionen der erfindungsgemäßen Additive mit einem Sprühtrockner (z.B. Modell Mobil Minor der Firma GEA Niro) bei einer Eingangstemperatur von etwa 230°C und einer Ausgangstemperatur von etwa 80°C getrocknet. Dafür wurden die wässrigen Lösungen der erfindungsgemäßen Additive zuvor mit 1 Gew.-% (bezogen auf den Feststoffgehalt der wässrigen Lösung) einer Mischung aus Additin RC 7135 LD (Antioxidans; Rhein Chemie GmbH) und einem mit Wasser mischbaren Lösungsmittel auf Polyethylenglykolbasis (Pluriol A 500 E, BASF SE) versetzt, welches in gleicher Gewichtsmenge wie die wässrige Lösungen bzw. Suspension der erfindungsgemäßen Additive eingesetzt wird. Die erhaltenen Pulver werden mit 1 Gew.-% hochdisperser Kieselsäure (N20P, Wacker Chemie AG) versetzt, mit einer Retsch Grindomix RM 200 Mühle für 10s bei 8.000 rpm gemahlen und über ein 500 µm Sieb filtriert.

**Polymersynthese**

Das Kammpolymer P1 basiert auf den Monomeren Maleinsäure, Acrylsäure und Vinyloxybutylpolyethylenglykol. Die Synthese des Kammpolymers P1 ist in der WO 2010/066470 auf Seite 10, Zeile 1 bis Zeile 38 beschrieben.

Das Kammpolymer P2 basiert auf den Monomeren Acrylsäure und Vinyloxybutylpolyethylenglykol. Die Synthese des Kammpolymers P2 ist in der WO 2006/133933 auf Seite 13, Zeile 15 bis Zeile 26 beschrieben, wobei die beschriebene Synthese so modifiziert wurde, dass 21,7 g Acrylsäure statt den beschriebenen 26 g Acrylsäure, sowie 8,3 g NaOH (20 %) statt den beschriebenen 10 g NaOH (20%) eingesetzt werden.

Beispielhafte Berechnung der Ladungsdichte:

$$\sum_j z_{S,j} \times n_{S,j} \text{ in mmol pro Gramm Polymer } = \frac{\text{n(Molzahl Einwaage Säuremonomere in mmol)} \cdot \text{ Ladungszahl Säuremonomer}}{\text{m(Masse Polymerlösung in g)} \cdot \text{ Feststoffgehalt der Polymerlösung in \%}}$$

Beispielberechnung für Polymer P2

$$\sum_j z_{S,j} \times n_{S,j} = \frac{(18.6 \text{ mmol } \cdot 1)}{(50\text{g } \cdot 43.1\%/100)} = 0.86 \text{ mmol / g}$$

Tabelle 1: Physikalische Daten der Kammpolymere

| | P1 | P2 |
|---|---|---|
| $\sum_j z_{S,j} \times n_{S,j}$ in mmol pro Gramm Polymer | 0.93 | 0.86 |
| Mw (GPC) | 40000 | 50000 |

**Beispiele zur Herstellung der erfindungsgemäßen Additive**

**Allgemeine Vorschrift:**

Die wässrige Lösung des Kammpolymeren wird mit den erfindungsgemäßen Metallkationsalzen, den erfindungsgemäßen Anionenverbindungen, sowie ggf. einer Base oder Säure zum Anpassen des pH Werts unter Rühren vermischt. Die Vermischung wird in einem bei 20°C temperierten 1l Doppelmantel-Glasreaktor mit Flügelrührer mit 300 U/min durchgeführt. Die Reihenfolge der Zugabe ist in der Tabelle durch einen Buchstabencode angegeben. P steht für die wässrige Lösung des Kammpolymers, K für das erfindungsgemäße Metallkationsalz, A für die erfindungsgemäße Anionverbindung und B bzw. S für Base bzw. Säure. Ein Code von PKAB bedeutet zum Beispiel, dass das Polymer P vorgelegt wird, anschließend wird Metallkationsalz K hinzugegeben. Anschließend erfolgt die Zugabe der Anionverbindung A und die Zugabe der Base B. Die Mengen beziehen sich immer auf die Feststoffgehalte. Der finale pH Wert der resultierenden Lösungen bzw. Suspensionen ist ebenfalls angegeben.

Beispielhafte Berechnung von Formel (a) anhand Beispiel 1:

Aus der Einwaagentabelle werden die entsprechenden Massen entnommen: Masse Polymer P1 14.71 g und Masse $Ca(OH)_2$ 1.46 g.
somit

$n_K$ = 1.46 g / 74.1 g/mol = 19.7 mmol,
ns = 14.71 g · 0.86 mmol/g = 12.65 mmol

und

$$\frac{\sum_i z_{K,i} \times n_{K,i}}{\sum_j z_{S,j} \times n_{S,j}} = \frac{19.7 \text{ mmol} \cdot 2}{12.65 \text{ mmol} \cdot 1} = 3.12$$

Beispiele für erfindungsgemäße Additive sind in den nachfolgenden Tabellen 2 bis 5 zusammengestellt:

Tabelle 2: Zusammensetzung der flüssigen Vorstufen der erfindungsgemäßen Beispiele

| **Nr** | **Polymer** | **Metall-Salze** | **Anion-Verb.** | **Bas e / Säure** | **pH** | **Reihenfolge** | **Wasser (M%)** | **Polymer (M%)** | **MetallSalz 1 (M%)** | **Säure (M%)** | **Anion-Verb. (M%)** | **Base (M%)** | $\frac{\sum_i z_{K,i} * n_{K,i}}{\sum_j z_{S,j} * n_{S,j}}$ | $\frac{\sum_l z_{A,l} * n_{A,l}}{\sum_j z_{K,j} * n_{K,j}}$ |
|---|---|---|---|---|---|---|---|---|---|---|---|---|---|---|
| **1** | P2 | $Ca(OH)_2$ | $H_3P$ | NaO | 10, | PKSAB | 78,24 | 14,71 | 1,46 | 3,68[1)] | 0,64 | 1,27 | 3,12 | 0,5 |
| **2** | P1 | $Ca(OH)_2$ | $H_3P$ | NaO | 9,4 | PKSAB | 76,7 | 16,3 | 1,5 | 3,9[1)] | 0,7 | 1,0 | 2,68 | 0,5 |
| **3** | P1 | $Ca(OH)_2$ | $H_3P$ | NaO | 9,3 | PKSAB | 73,5 | 21,7 | 1,0 | 2,6[1)] | 0,4 | 0,8 | 1,34 | 0,5 |
| **4** | P2 | $Ca(OH)_2$ | $H_3P$ | NaO | 9,5 | PKSAB | 73,9 | 21,0 | 1,0 | 2,5[2)] | 0,5 | 1,1 | 1,53 | 0,5 |
| **5** | P1 | $Ca(NH_2SO$ | $H_3P$ | NaO | 9,4 | PKAB | 68,5 | 21,8 | 8,5 | - | 0,5 | 0,7 | 1,34 | 0,5 |

1) Amidosulfonsäure; 2) Essigsäure

Tabelle 3: Pulverförmige Additive

| Nr | Polymer | Metall-Salze | Anion-Verb. | Base / Säure | pH | Reihenfolge | Wasser M% | Polymer (M%) | MetallSalz 1 (M%) | Säure (M%) | Anion-Verb. (M%) | Base (M%) | $\frac{\sum_i z_{K,i} * n_{K,i}}{\sum_j z_{S,j} * n_{S,j}}$ | $\frac{\sum_l z_{A,l} * n_{A,l}}{\sum_j z_{K,j} * n_{K,j}}$ |
|---|---|---|---|---|---|---|---|---|---|---|---|---|---|---|
| **1** | P2 | $Ca(OH)_2$ | $H_3P$ | NaO | 10, | PKSA | | 67,6 | 6,7 | 16,9[1)] | 3,0 | 5,9 | 3,12 | 0,5 |
| **2** | P1 | $Ca(OH)_2$ | $H_3P$ | NaO | 9,4 | PKSA | | 69,9 | 6,5 | 16,6[1)] | 2,9 | 4,1 | 2,68 | 0,5 |
| **3** | P1 | $Ca(OH)_2$ | $H_3P$ | NaO | 9,3 | PKSA | | 81,9 | 3,8 | 9,7[1)] | 1,7 | 2,9 | 1,34 | 0,5 |
| **4** | P2 | $Ca(OH)_2$ | $H_3P$ | NaO | 9,5 | PKSA | | 80,8 | 4,0 | 9,2[2)] | 1,8 | 4,2 | 1,53 | 0,5 |
| **5** | P1 | $Ca(NH_2SO_3$ | $H_3P$ | NaO | 9,4 | PKAB | | 83,4 | 12,1 | - | 1,7 | 2,8 | 1,34 | 0,5 |

Der Referenz-Mörtel setzt sich aus Anhydrit und 60 Gew.-% Normsand (DIN EN 196-1) zusammen. Als Anreger wurde entweder 0,45 Gew.-% Kaliumsulfat oder 0,90 Gew.-% Portland Zement zugegeben. Die Menge an Anhydrid wird so gewählt, dass sich 100 Gew.-% ergeben. Die Wassermenge, bezogen auf den Trockenmörtel, beträgt 14,0 Gew.-%, was einem Wasserbindemittelwert von 0.35 entspricht. Der Fließmittelgehalt wurde bei allen Versuchen so gewählt, dass die Mörtel 5 min nach Wasserzugabe ein Fließmaß am Hägermann-Konus von 280±5 mm erreichten.

Die Herstellung der Mörtel erfolgt in Anlehnung an DIN EN 196-1:2005 in einem Mörtelmischer mit einem Fassungsvermögen von 5 l. Zum Anmischen werden Wasser, Fließmittel und Anhydrit in den Mischbehälter gegeben. Unmittelbar danach wird der Mischvorgang mit niedriger Geschwindigkeit des Wirblers (140 U/min) gestartet. Nach 30 s wird der Sand gleichmäßig innerhalb von 30 Sekunden (s) der Mischung zugegeben. Danach wird der Mischer auf eine höhere Geschwindigkeit umgeschaltet (285 U/min) und das Mischen für weitere 30 s fortgesetzt. Anschließend wird der Mischer für 90 s angehalten. Während der ersten 30 s wird der Mörtel, der an der Wand und am unteren Teil der Schüssel klebt, mit einem Gummischrapper entfernt und in die Mitte der Schüssel gegeben. Nach der Pause wird der Mörtel für weitere 60 s bei der höheren Mischgeschwindigkeit gemischt. Die Gesamtmischzeit beträgt 4 min.

Unmittelbar nach dem Ende des Mischvorgangs wird von allen Mörteln das Fließmaß mit dem Hägermann-Konus ohne Zuführung von Verdichtungsenergie in Anlehnung an die SVB-Richtlinie des Deutschen Ausschusses für Stahlbeton [1] bestimmt. Der Hägermann-Konus (doben = 70 mm, dunten = 100 mm, h = 60 mm) wird mittig auf einer trockenen Glasplatte mit einem Durchmesser von 400 mm platziert und bis zur vorgesehenen Höhe mit Mörtel befüllt. Unmittelbar nach dem Ausnivilieren bzw. 5 min nach dem ersten Kontakt von Zement und Wasser wird der Hägermann-Konus abgezogen, zum Abtropfen 30 s über dem auseinander fließenden Mörtel gehalten und dann entfernt. Sobald das Fließmaß zum Stillstand kommt, wird der Durchmesser mit einem Messschieber an zwei rechtwinklig zueinander liegenden Achsen bestimmt und der Mittelwert berechnet. Nach der Messung wird die Probe entsorgt. Im Alter von 9, 29 und 59 min wird der im Mischbehälter verbliebene Mörtel erneut für 10 s zum Abbau der Ruhestruktur mit dem Mörtelmischer aufgemischt, in den Hägermann-Konus eingefüllt und das Fließmaß bestimmt.

[1] Deutscher Ausschuss für Stahlbetonbau (Hrsg.): DAfStb - Richtlinie Selbstverdichtender Beton (SVB-Richtlinie). Berlin, 2003

**Anwendungsbeispiele**

1) Fließestrich basierend auf Syntheseanhydrit
Mix Design:

39,55 Gew.-% Syntheseanhydrit (Lanxess Anhydritbinder CAB 30 (SO1281731), Werk Stulln)
0,45 Gew.-% $K_2SO_4$
60,00 Gew.-% Normsand
w/b= 0,35
Zielfließmaß nach 5 Minuten: 28±1cm

Tabelle 4: Ausbreitmaße Fließestrich auf Basis Syntheseanhydrit

| Polymer | Form | Dosierung [%] | Zeitpunkt der Messung | | | | | Delta 120-5 min [cm] |
|---|---|---|---|---|---|---|---|---|
| | | | 5 min | 10 min | 30 min | 60 min | 120 min | |
| Melment F10 | Pulver | 0,35 | 27,5 | 27,1 | 25,7 | 24,5 | 23,2 | **-4,3** |
| P1 | Lösung | 0,07 | 28.4 | 27.8 | 25.7 | 23.8 | 22.4 | **-6,0** |
| P2 | Pulver | 0,055 | 28.9 | 28.3 | 26.1 | 23.5 | 21.6 | **-7,3** |
| 1 | Pulver | 0,14 | 29.0 | 30.4 | 30.4 | 30.2 | 29.3 | **+0,3** |
| 2 | Pulver | 0,26 | 27.7 | 30.2 | 30.5 | 30.2 | 30.3 | **+2,6** |
| 3 | Pulver | 0,165 | 28.0 | 29.8 | 30.5 | 30.1 | 30.3 | **+2,3** |
| 4 | Pulver | 0,08 | 28.0 | 28.7 | 27.6 | 27.7 | 27.4 | **-0,6** |

2) Fließestrich basierend auf Naturanhydrit
Mix Design:

39,10 Gew.-% Naturanhydrit (Knauf NAH Staub, Werk Heidenheim)
0,90 Gew.-% CEM I 52,5 N (Milke)
60,00 Gew.-% Normsand
w/b = 0.35
Zielfließmaß nach 5 Minuten: 28±1 cm

Tabelle 5: Ausbreitmaße Fließestrich auf Basis Naturanhydrit

| Polymer | Form | Dosierung [Gew.-% bez. a. Bindemittel] | Fließmaß in cm nach | | | | | Delta (120 min - 5 min) [cm] |
|---|---|---|---|---|---|---|---|---|
| | | | 5 min | 10 min | 30 min | 60 min | 120 min | |
| P1 | Lösung | 0,09 | 27,6 | 26,9 | 25,9 | 22,0 | 14,6 | **-13,0** |
| 5 | Pulver | 0,14 | 28,1 | 29,2 | 29,6 | 29,8 | 29,1 | **+1,0** |

**Patentansprüche**

1. Zusammensetzung umfassend, bezogen auf die Gesamtmasse der Zusammensetzung

A) mindestens 10 Gew.-% eines Bindemittels auf Basis von Calciumsulfat und
B) 0,005 bis 5 Gew.-% eines Additivs hergestellt aus

i) wenigstens einem wasserlöslichen Salz eines mehrwertigen Metallkations,
ii) wenigstens einer Verbindung, die ein Anion freizusetzen vermag, das mit dem mehrwertigen Metallkation ein schwerlösliches Salz bildet, und
iii) wenigstens einem polymeren Dispergiermittels, das anionische und/oder anionogene Gruppen und Polyetherseitenketten umfasst,

wobei das mehrwertige Metallkation ausgewählt ist aus $Al^{3+}$, $Fe^{3+}$, $Fe^{2+}$, $Zn^{2+}$, $Mn^{2+}$, $Cu^{2+}$, $Mg^{2+}$, $Ca^{2+}$, $Sr^{2+}$, $Ba^{2+}$ und Gemischen davon,
wobei das Metallkation in solcher Menge vorliegt, dass das folgende Verhältnis nach Formel (a) größer als 0,1 und kleiner oder gleich 30 ist:

$$0{,}1 < \frac{\sum_i z_{K,i} \times n_{K,i}}{\sum_j z_{S,j} \times n_{S,j}} \leq 30 \qquad \text{(a)}$$

und wobei
$z_{K,i}$ für den Betrag der Ladungszahl des mehrwertigen Metallkations steht,
$n_{K,i}$ für die Molzahl des mehrwertigen Metallkations steht,
$z_{S,j}$ für den Betrag der Ladungszahl der im polymeren Dispergiermittel enthaltenen anionischen und anionogenen Gruppe steht, und
$n_{S,j}$ für die Molzahl der im polymeren Dispergiermittel enthaltenen anionischen und anionogenen Gruppe steht,

die Indices i und j voneinander unabhängig und eine ganze Zahl größer als 0 sind, wobei i für die Anzahl verschiedenartiger mehrwertiger Metallkationen steht und j für die Anzahl verschiedenartiger im polymeren Dispergiermittel enthaltener anionischer und anionogener Gruppen steht.

2. Zusammensetzung nach Anspruch 1, wobei das mehrwertige Metallkation und das Anion in Mengen vorliegen, die nach folgenden Formeln berechnet werden:

$$0{,}1 < \frac{\sum_i z_{K,i} \times n_{K,i}}{\sum_j z_{S,j} \times n_{S,j}} \leq 30 \qquad \text{(a)}$$

$$0{,}01 < \frac{\sum_l z_{A,l} \times n_{A,l}}{\sum_j z_{K,i} \times n_{K,i}} \leq 3 \qquad \text{(b)}$$

wobei

$z_{K,i}$ für den Betrag der Ladungszahl des mehrwertigen Metallkations steht,
$n_{K,i}$ für die Molzahl des mehrwertigen Metallkations steht,
$z_{S,j}$ für Ladungszahl der im polymeren Dispergiermittel enthaltenen anionischen und anionogenen Gruppen steht,
$n_{S,j}$ für die Molzahl der im polymeren Dispergiermittel enthaltenen anionischen und anionogenen Gruppen steht,
$z_{A,l}$ für die Ladungszahl des Anions steht,
$n_{A,l}$ für die Molzahl des Anions steht,

die Indices i, j und l voneinander unabhängig und eine ganze Zahl größer als 0 sind, i für die Anzahl verschiedenartiger mehrwertiger Metallkationen steht, j für die Anzahl verschiedenartiger im polymeren Dispergiermittel enthaltener anionischer und anionogener Gruppen steht, und l für die Anzahl verschiedenartiger Anionen, welche mit dem Metallkation ein schwerlösliches Salz zu bilden vermögen, steht.

3. Zusammensetzung nach Anspruch 1 oder 2, wobei es sich bei dem Anion um mindestens eines aus der Gruppe Carbonat, Oxalat, Silikat, Phosphat, Polyphosphat, Phosphit, Borat, Aluminat, Ferrat, Zinkat und Sulfat handelt.

4. Zusammensetzung nach einem der vorhergehenden Ansprüche, wobei in dem Additiv das mehrwertige Metallkation und das Anion in Mengen vorliegen, die nach folgender Formel berechnet werden:

$$0{,}25 < \frac{\left(\sum_i z_{K,i} \times n_{K,i}\right)^2}{\left(\sum_l z_{A,l} \times n_{A,l}\right)\left(\sum_j z_{s,j} \times n_{s,j}\right)} < 25 \qquad \text{(c)}$$

5. Zusammensetzung nach einem der vorhergehenden Ansprüche, **dadurch gekennzeichnet, dass** das Additiv zusätzlich wenigstens ein pH-Neutralisierungsmittel umfasst.

6. Zusammensetzung nach Anspruch 5, wobei es sich bei dem pH-Neutralisierungsmittel um mindestens eines aus der Gruppe Alkalimetallhydroxid, organisches Monoamin, organisches Diamin, organisches Polyamin oder Ammoniak handelt.

7. Zusammensetzung nach einem der vorhergehenden Ansprüche, wobei das polymere Dispergiermittel als anionische oder anionogene Gruppe zumindest eine Struktureinheit der allgemeinen Formeln (Ia), (Ib), (Ic) und/oder (Id) aufweist:

(Ia)

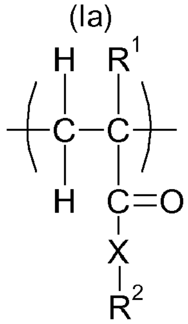

worin

$R^1$ für H oder eine unverzweigte oder verzweigte Ci-$C_4$-Alkylgruppe, $CH_2COOH$ oder $CH_2CO$-X-$R^2$ steht;
X für $NR^3$-($C_nH_{2n}$) oder O-($C_nH_{2n}$) mit n = 1, 2, 3 oder 4 steht, wobei das Stickstoffatom bzw. das Sauerstoffatom an die CO-Gruppe gebunden ist;

$R^2$ für $PO_3M_2$, $O\text{-}PO_3M_2$, $(C_6H_4)\text{-}PO_3M_2$ oder $(C_6H_4)\text{-}OPO_3M_2$ steht; oder X für eine chemische Bindung und $R^2$ für OM stehen;

$R^3$ für H, $C_1$-$C_6$-Alkyl, $(C_nH_{2n})\text{-}OH$, $(C_nH_{2n})\text{-}PO_3M_2$, $(C_nH_{2n})\text{-}OPO_3M_2$, $(C_6H_4)\text{-}PO_3M_2$, $(C_6H_4)\text{-}OPO_3M_2$ oder $(C_nH_{2n})\text{-}O\text{-}(AO)_\alpha\text{-}R^4$ steht;

$\alpha$ für eine ganze Zahl von 1 bis 350 steht;

$R^4$ für H oder eine unverzweigte oder verzweigte $C_1$-$C_4$-Alkylgruppe steht; und

M unabhängig voneinander für H oder ein Kationäquivalent steht;

(Ib)

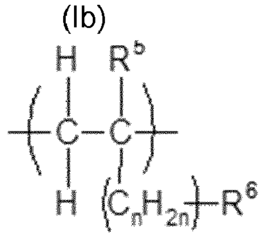

worin

$R^5$ für H oder eine unverzweigte oder verzweigte $C_1$-$C_4$-Alkylgruppe steht;

n für 0, 1, 2, 3 oder 4 steht;

$R^6$ für $PO_3M_2$ oder $O\text{-}PO_3M_2$ steht; und

M unabhängig voneinander für H oder ein Kationäquivalent steht

(Ic)

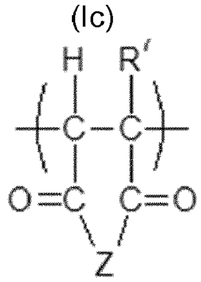

worin

$R^7$ für H oder eine unverzweigte oder verzweigte $C_1$-$C_4$-Alkylgruppe steht;

Z für O oder $NR^8$ steht; und

$R^8$ für H, $(C_nH_{2n})\text{-}OH$, $(C_nH_{2n})\text{-}PO_3M_2$, $(C_nH_{2n})\text{-}OPO_3M_2$, $(C_6H_4)\text{-}PO_3M_2$, oder $(C_6H_4)\text{-}OPO_3M_2$ steht,

n für 1, 2, 3 oder 4 steht, und

M unabhängig voneinander für H oder ein Kationäquivalent steht;

(Id)

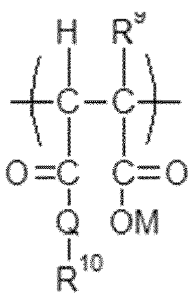

worin

$R^9$ für H oder eine unverzweigte oder verzweigte $C_1$-$C_4$-Alkylgruppe steht;
Q für $NR^{10}$ oder O steht;
$R^{10}$ für H, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$ oder $(C_nH_{2n})$-O-$(AO)_\beta$-$R^{11}$ steht,
A für $C_xH_{2x}$ mit x = 2, 3, 4 oder 5 oder $CH_2CH(C_6H_5)$ steht;
β für eine ganze Zahl von 1 bis 350 steht;
$R^{11}$ für H oder eine unverzweigte oder verzweigte $C_1$-$C_4$-Alkylgruppe steht;
n für 1, 2, 3 oder 4 steht; und
M unabhängig voneinander für H oder ein Kationäquivalent steht

**8.** Additiv nach einem der vorhergehenden Ansprüche, wobei das polymere Dispergiermittel als Polyetherseitenkette zumindest eine Struktureinheit der allgemeinen Formeln (IIa), (IIb), (IIc) und/oder (IId) aufweist:

(IIa)

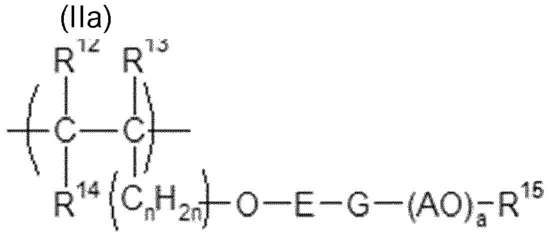

worin

$R^{12}$, $R^{13}$ und $R^{14}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht;
G für O, NH oder CO-NH steht; oder
E und G gemeinsam für eine chemische Bindung stehen;
A für $C_xH_{2x}$ mit x = 2, 3, 4 oder 5 oder $CH_2CH(C_6H_5)$ steht;
n für 0, 1, 2, 3, 4 und/oder 5 steht;
a für eine ganze Zahl von 2 bis 350 steht; und
$R^{15}$ für H, eine unverzweigte oder verzweigte $C_1$-$C_4$-Alkylgruppe, CO-$NH_2$ und/oder $COCH_3$ steht;

(IIb)

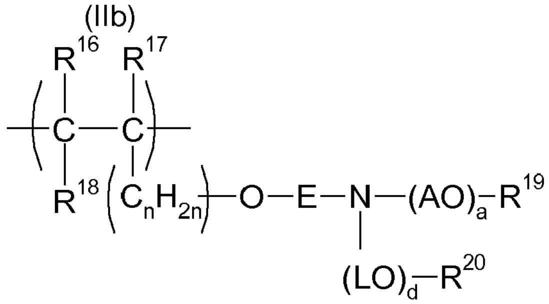

worin

$R^{16}$, $R^{17}$ und $R^{18}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht;
A für $C_xH_{2x}$ mit x = 2, 3, 4 oder 5 oder $CH_2CH(C_6H_5)$ steht;
L für $C_xH_{2x}$ mit x = 2, 3, 4 oder 5 oder $CH_2$-$CH(C_6H_5)$ steht;
a für eine ganze Zahl von 2 bis 350 steht;

d für eine ganze Zahl von 1 bis 350 steht;
$R^{19}$ für H oder eine unverzweigte oder verzweigte $C_1$-$C_4$-Alkylgruppe steht;
$R^{20}$ für H oder eine unverzweigte $C_1$-$C_4$-Alkylgruppe steht; und
n für 0, 1, 2, 3, 4 oder 5 steht;

(IIc)

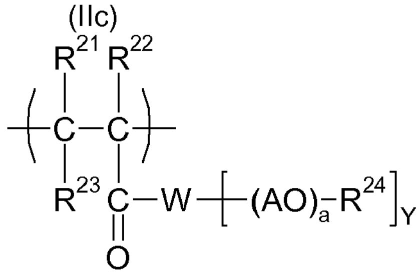

worin

$R^{21}$, $R^{22}$ und $R^{23}$ unabhängig voneinander für H oder eine unverzweigte oder verzweigte $C_1$-$C_4$-Alkylgruppe stehen;
W für O, $NR^{25}$, N steht
Y für 1 steht, wenn W = O oder $NR^{25}$, und für 2 steht, wenn W = N;
A für $C_xH_{2x}$ mit x = 2, 3, 4 oder 5 oder $CH_2CH(C_6H_5)$ steht;
a für eine ganze Zahl von 2 bis 350 steht;
$R^{24}$ für H oder eine unverzweigte oder verzweigte $C_1$-$C_4$-Alkylgruppe steht; und
$R^{25}$ für H oder eine unverzweigte oder verzweigte $C_1$-$C_4$-Alkylgruppe steht;

(IId)

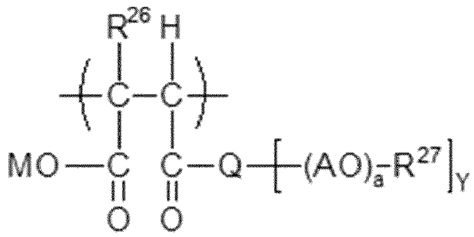

worin

$R^{26}$ für H oder eine unverzweigte oder verzweigte $C_1$-$C_4$-Alkylgruppe steht;
Q für $NR^{10}$, N oder O steht;
Y für 1 steht, wenn Q = O oder $NR^{28}$ und für 2 steht, wenn Q = N;
$R^{27}$ für H oder eine unverzweigte oder verzweigte $C_1$-$C_4$-Alkylgruppe steht;
$R^{28}$ für H oder eine unverzweigte oder verzweigte $C_1$-$C_4$-Alkylgruppe steht;
A für $C_xH_{2x}$ mit x = 2, 3, 4 oder 5, oder $CH_2C(C_6H_5)H$ steht;
a für eine ganze Zahl von 2 bis 350 steht; und
M unabhängig voneinander für H oder ein Kationäquivalent steht

**9.** Additiv nach einem der vorhergehenden Ansprüche, wobei das polymere Dispergiermittel ein Polykondensationsprodukt umfassend Struktureinheiten (III) und (IV) ist:

(III)

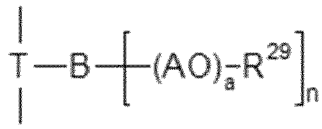

worin

T für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht;
A für $C_xH_{2x}$ mit x = 2, 3, 4 oder 5 oder $CH_2CH(C_6H_5)$ steht;
a für eine ganze Zahl von 1 bis 300 steht; und
$R^{29}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen, wovon 1 oder 2 Atome Heteroatome sind, die ausgewählt sind unter N, O und S, steht;

wobei die Struktureinheit (IV) ausgewählt ist unter den Struktureinheiten (IVa) und (IVb):

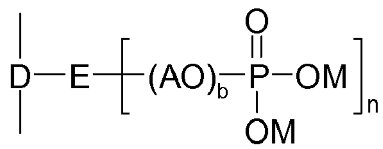

(IVa)

worin

D für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
E für N, NH oder O steht, mit der Maßgabe, dass n für 2 steht, wenn E für N steht und der Maßgabe, dass n für 1 steht, wenn E für NH oder O steht;
A für $C_xH_{2x}$ mit x = 2, 3, 4 oder 5 oder $CH_2CH(C_6H_5)$ steht;
b für eine ganze Zahl von 1 bis 300 steht; und
M unabhängig voneinander für H oder ein Kationäquivalent stehen;

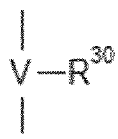

(IVb)

worin

V für einen substituierten oder unsubstituierten Phenyl- oder Naphthylrest steht und gegebenenfalls durch 1 oder zwei Reste substituiert ist, die ausgewählt sind unter $R^{31}$, OH, $OR^{31}$, $(CO)R^{31}$, COOM, $COOR^{31}$, $SO_3R^{31}$ und $NO_2$;
$R^{30}$ für COOM, $OCH_2COOM$, $SO_3M$ oder $OPO_3M_2$ steht;
$R^{31}$ für $C_1$-$C_4$-Alkyl, Phenyl, Naphthyl, Phenyl-$C_1$-$C_4$-alkyl oder $C_1$-$C_4$-Alkylphenyl; und
M unabhängig voneinander für H oder ein Kationäquivalent stehen.

**10.** Zusammensetzung nach einem der vorhergehenden Ansprüche, **dadurch gekennzeichnet, dass** es sich bei dem

Bindemittel auf Basis von Calciumsulfat um α-Halbhydrat, α/β-Halbhydrat, β-Halbhydrat, natürliches Anhydrit, synthetisches Anhydrit, aus der Rauchgasentschwefelung erhaltenes Anhydrit, und/oder Mischungen von zwei oder mehreren davon handelt.

**11.** Zusammensetzung nach einem der vorhergehenden Ansprüche, **dadurch gekennzeichnet, dass** diese mindestens ein weiteres Bindemittel aus der Reihe Portlandzement, Weißzement, Calciumaluminatzement, Calciumsulfoaluminatzement und puzzolanische Bindemittel wie z. B. Flugasche, Metakaolin, Silicastaub und Hüttensand umfasst.

**12.** Zusammensetzung nach einem der vorhergehenden Ansprüche, **dadurch gekennzeichnet, dass** diese mindestens eine Verbindung aus der Reihe Quarzsand, Quarzmehl, Kalkstein, Schwerspat, Calcit, Aragonit, Vaterit, Dolomit, Talkum, Kaolin, Glimmer, Kreide, Titandioxid, Rutil, Anatas, Aluminiumhydroxid, Aluminiumoxid, Magnesiumhydroxid und Brucit umfasst.

**13.** Verfahren zur Herstellung einer Zusammensetzung nach einem der Ansprüche 1 bis 12, **dadurch gekennzeichnet, dass**

a) das wenigstens eine wasserlösliche Salz eines mehrwertigen Metallkations,
b) die wenigstens eine Verbindung, die ein Anion freizusetzen vermag, das mit dem mehrwertigen Metallkation ein schwerlösliches Salz bildet und
c) das wenigstens eine polymere Dispergiermittel, das anionische und/oder anionogene Gruppen und Polyetherseitenketten umfasst,
in Gegenwart von Wasser miteinander in Kontakt gebracht werden und das so erhaltene Additiv
d) mit den weiteren Komponenten der Zusammensetzung, umfassend das Bindemittel auf Basis von Calciumsulfat,

in Kontakt gebracht wird.

**14.** Verwendung einer Zusammensetzung nach einem der Ansprüche 1 bis 12 als Calciumsulfat-Fließestrich, fließfähige Calciumsulfat-Spachtelmasse und erdfeuchter Calciumsulfat-Estrich

Europäisches Patentamt
European Patent Office
Office européen des brevets

# EUROPÄISCHER RECHERCHENBERICHT

Nummer der Anmeldung
EP 14 15 1976

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E,D | EP 2 687 498 A1 (CONSTR RES & TECH GMBH [DE]) 22. Januar 2014 (2014-01-22)<br>* Ansprüche 9,10 *<br>----- | 8,9 | INV.<br>C04B24/26<br>C04B28/14 |
| A,D | EP 2 412 689 A2 (SILKROAD C & T CO LTD [KR]) 1. Februar 2012 (2012-02-01)<br>* Ansprüche 1-21; Beispiele 1-6 *<br>----- | 1-14 | |
| A,D | US 7 879 146 B2 (RAKI LAILA [CA] ET AL) 1. Februar 2011 (2011-02-01)<br>* Ansprüche 1-17; Beispiele 1-4 *<br>----- | 1-14 | |
| A,D | WO 2009/004348 A2 (GRACE W R & CO [US]; HUGHES DAVID WILLIAM [GB]; NORRIS ERNIE [GB]) 8. Januar 2009 (2009-01-08)<br>* Ansprüche 1-6; Beispiele 1-8 *<br>----- | 1-14 | |
| A,D | EP 1 136 508 A1 (SIKA AG [CH]) 26. September 2001 (2001-09-26)<br>* Ansprüche 1-13; Tabellen 1-5 *<br>----- | 1-14 | |
| A,D | WO 2010/029117 A2 (CONSTR RES & TECH GMBH [DE]; LORENZ KLAUS [DE]; KRAUS ALEXANDER [DE];) 18. März 2010 (2010-03-18)<br>* Ansprüche 1-30; Beispiele 1-29 *<br>----- | 1-14 | RECHERCHIERTE SACHGEBIETE (IPC)<br>C04B |
| A,D | WO 00/48961 A1 (MBT HOLDING AG [CH]; YAGUCHI MINORU [JP]; NAGAMINE HIDENORI [JP]; KANE) 24. August 2000 (2000-08-24)<br>* Ansprüche 1-11; Beispiele 1-15 *<br>----- | 1-14 | |

Der vorliegende Recherchenbericht wurde für alle Patentansprüche erstellt

1

| Recherchenort | Abschlußdatum der Recherche | Prüfer |
|---|---|---|
| Den Haag | 24. Juni 2014 | Burtan, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 14 15 1976

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2014

| Im Recherchenbericht angeführtes Patentdokument | Datum der Veröffentlichung | Mitglied(er) der Patentfamilie | Datum der Veröffentlichung |
|---|---|---|---|
| EP 2687498 A1 | 22-01-2014 | EP 2687498 A1<br>WO 2014013077 A1 | 22-01-2014<br>23-01-2014 |
| EP 2412689 A2 | 01-02-2012 | BR PI1103482 A2<br>CN 102424542 A<br>EP 2412689 A2<br>KR 20120010336 A<br>SG 177829 A1<br>US 2012046393 A1 | 11-12-2012<br>25-04-2012<br>01-02-2012<br>03-02-2012<br>28-02-2012<br>23-02-2012 |
| US 7879146 B2 | 01-02-2011 | CA 2554347 A1<br>US 2007022916 A1<br>US 2011083586 A1 | 01-02-2007<br>01-02-2007<br>14-04-2011 |
| WO 2009004348 A2 | 08-01-2009 | KEINE | |
| EP 1136508 A1 | 26-09-2001 | CA 2342011 A1<br>DE 1136508 T1<br>EP 1136508 A1<br>ES 2164618 T1<br>GR 2001300069 T1<br>JP 5052715 B2<br>JP 2001316152 A<br>US 2002007019 A1<br>US 2004127607 A1<br>US 2007032599 A1 | 22-09-2001<br>18-04-2002<br>26-09-2001<br>01-03-2002<br>31-12-2001<br>17-10-2012<br>13-11-2001<br>17-01-2002<br>01-07-2004<br>08-02-2007 |
| WO 2010029117 A2 | 18-03-2010 | AU 2009290847 A1<br>CA 2736307 A1<br>CN 102149737 A<br>EP 2334708 A2<br>JP 5479478 B2<br>JP 2012505812 A<br>RU 2011113835 A<br>US 2011166261 A1<br>WO 2010029117 A2 | 18-03-2010<br>18-03-2010<br>10-08-2011<br>22-06-2011<br>23-04-2014<br>08-03-2012<br>20-10-2012<br>07-07-2011<br>18-03-2010 |
| WO 0048961 A1 | 24-08-2000 | AU 771540 B2<br>CA 2360412 A1<br>CN 1340036 A<br>EP 1152995 A1<br>JP 4394765 B2<br>JP 2000233957 A<br>KR 20010108218 A<br>MX 234484 B<br>NZ 514196 A | 25-03-2004<br>24-08-2000<br>13-03-2002<br>14-11-2001<br>06-01-2010<br>29-08-2000<br>07-12-2001<br>16-02-2006<br>25-06-2004 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 14 15 1976

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2014

| Im Recherchenbericht angeführtes Patentdokument | Datum der Veröffentlichung | Mitglied(er) der Patentfamilie | Datum der Veröffentlichung |
|---|---|---|---|
| | | TR 200102352 T2 | 21-01-2002 |
| | | US 6762220 B1 | 13-07-2004 |
| | | WO 0048961 A1 | 24-08-2000 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0537870 A
- EP 0736553 A
- EP 1138698 A
- EP 1189955 A
- EP 1902085 A
- US 7338990 B2
- US 7056964 B2
- WO 0249983 A
- EP 0894811 A
- EP 1851256 A
- EP 2463314 A
- EP 0753488 A
- WO 2006042709 A
- WO 2010026155 A
- WO 2010066470 A
- WO 2006133933 A


### In der Beschreibung aufgeführte Nicht-Patentliteratur


- **J. PLANK et al.** *Cem. Conr. Res.,* 2009, vol. 39, 1-5